# EUROPEAN PATENT SPECIFICATION

(11) **EP 2 302 377 B1**
(45) Date of publication and mention of the grant of the patent: **27.05.2015**
(21) Application number: 10179337.0
(22) Date of filing: 24.09.2010
(51) Int. Cl.: G01N 15/00, G01N 15/10, G01N 15/14, G01N 15/12

(54) **Blood cell counter, diagnosis support method, and computer program product**
Blutzellenzähler, Diagnosehilfsverfahren und Computerprogrammprodukt
Compteur de cellules sanguines, procédé de support de diagnostic et produit de programme informatique

(30) Priority: 25.09.2009 JP 2009220647
(43) Date of publication of application: 30.03.2011
(73) Proprietor: SYSMEX CORPORATION, Kobe-shi, Hyogo 651-0073 (JP)
(72) Inventor: Linssen, Jo, 22848 Norderstedt (DE); Guhl, Matthias, 22848 Norderstedt (DE)
(74) Representative: Hoffmann Eitle

(56) References cited:
- EP-A1- 2 083 268
- EP-A2- 1 936 352
- EP-A2- 1 953 527
- WO-A1-01/94938
- US-A- 5 692 220
- US-A- 5 812 419
- US-A1- 2005 002 826
- US-A1- 2006 004 530
- US-A1- 2007 076 190
- US-A1- 2009 238 439

## Description

### FIELD OF THE INVENTION

The present invention relates to a blood cell counter, a diagnosis support method, and a computer program product.

### BACKGROUND

Among patients who have a certain illness, a patient who has become clinically seriously ill is placed in an intensive care unit (ICU) or the like in a hospital, and monitored around the clock so as to receive an intensive treatment. If a prognosis can be given to such a seriously ill patient quickly, it is possible to appropriately decide treatment policies and administration plans to be given the patient. Here, such clinically seriously ill patients include patients who have been given a diagnosis of Systemic Inflammatory Response Syndrome (SIRS) and patients who have fallen into a serious condition of dysfunction of respiration, circulation, metabolism, or the like. A prognosis means to make a prediction of whether the patient's condition is so severe as to lead to death with a high probability, a prediction of whether the patient's condition is so severe as to require long-term treatment, and the like. For example, if a quick prognosis can be given to a patient who has been given a diagnosis of SIRS, it is possible to quickly start appropriate treatment and administration, and further, it is possible to prevent the illness from progressing into a serious illness (for example, multiple organ dysfunction syndrome (MOD)).

Conventionally, as a method for making a prognosis for an ICU patient, a scoring method such as APACHE-II (Acute Physiology and Chronic Health Evaluation), SOFA (Sepsis-related Organ Failure Assessment), or the like has been used.

In the case of APACHE-II, a score value is calculated by using points based on twelve measurement values that are indices of organ functions such as body temperature, blood pressure, PaO₂, serum creatinine, and the like, a point based on age, and a point based on a chronic illness. Then, the degree of severity of the illness is stratified based on the calculated score value, so as to make a prognosis about survival or death of the patient.

In the case of SOFA, a score value is calculated based on six items of the ratio of the oxygen partial pressure in arterial blood to the oxygen concentration in inspiration (PaO2/FiO2), platelet count, bilirubin level, blood pressure, evaluation scale of impaired consciousness (Glasgow coma scale), and creatinine level or urine volume. In SOFA, the degree of severity of illness is estimated based on the calculated score value.

Axcel Stachon. et al., Critical Care, 2007 11(3): R62. and B. Montag. et al., Pabst Science Publishers, 2003: 69-73. disclose that nucleated red blood cells (NRBC) in the blood of a patient in a severe condition of an illness are relevant to the death rate of the patient. B. Montag. et al. also discloses that immature granulocytes (IG) in the blood of a patient with septicemia are relevant to the death rate of the patient.

The scoring methods such as APACHE-II and SOFA have a problem in that information of a large number of test items are required and thus complicated tests are required, resulting in high costs.

On the other hand, although it is disclosed in Axcel Stachon. et al. and B. Montag. et al. that the nucleated red blood cells (NRBC) are relevant to the death rate of the patient, even if the nucleated red blood cells (NRBC) are used as a single index to make a prognosis, it is difficult to make a quick prognosis after the patient has become seriously ill. Further, although it is disclosed in B. Montag. et al. that immature granulocytes (IG) are relevant to the death rate of the patient, even if immature granulocytes (IG) are used as a single index to make a prognosis, it is also difficult to make a quick prognosis.

US 5 812 419 A discloses a method of performing a first analysis and a second analysis on a single blood sample obtained with a single blood draw from a patient with an automated analyzer including the steps of supplying the single blood sample obtained with the single blood draw from the patient to the automated analyzer. A memory on the automated analyzer containing a software routine is automatically accessed. The software routine is useful to adapt an optical system on the automated analyzer to correspond to the first analysis and the second analysis.

### SUMMARY

The scope of the present invention is defined solely by the appended claims. In particular, the present invention proposes a blood cell counter apparatus according to claim 1, a diagnosis support method according to claim 8 and a computer program product according to claim 13. Further embodiments are defined by the dependent claims.
(1) A first aspect of the present invention is a blood cell counter apparatus comprising: a detector adapted to detect blood cells in blood of a subject; and a controller adapted to obtain based on a detection result by the detector, first analytical information about nucleated red blood cells in the blood, and second analytical information about granulocytes in the blood or third analytical information about platelets in the blood, and for outputting diagnosis support information for supporting prognosis of the subject, based on the first analytical information and on the second analytical information or the third analytical information about platelets in the blood, and for outputting diagnosis support information for supporting prognosis of Systemic Inflammatory Response Syndrome of the subject, based on the first analytical information and on the second analytical information or the third analytical information that have been obtained, wherein the controller calculates an index based on the first analytical information and the second analytical information or the third analytical information, by using a predetermined standard, and outputs the diagnosis support information based on the calculated index.
2) The apparatus of (1), wherein
   the controller obtains based on the detection result by the detector the first analytical information, the second analytical information, and the third analytical information, calculates the index based on the first analytical information to the third analytical information, and outputs the diagnosis support information based on the calculated index.
3) The apparatus of (2), wherein
   the controller obtains based on the detection result by the detector fourth analytical information about immature reticulocytes in the blood, calculates the index based on the first analytical information to the fourth analytical information, and outputs the diagnosis support information based on the calculated index.
4) The apparatus of any one of (1) to (3), wherein
   the second analytical information is information about neutrophils or immature granulocytes in the blood; and the third analytical information is information about mature platelets or in immature platelets in the blood.
5) The apparatus of (3), wherein
   the detector is configured to detect blood cells in stained blood, and
   the controller obtains information about number of neutrophils in the blood as the second analytical information, obtains information about mature platelets in the blood as the third analytical information, obtains based on the detection result by the detector fifth analytical information indicating the degree of staining of the neutrophils in the blood, sixth analytical information about number of immature granulocytes in the blood, and seventh analytical information about immature platelets in the blood, calculates the index based on the first analytical information to the seventh analytical information, and outputs the diagnosis support information based on the calculated index.
6) The apparatus of any one of (1) to (5), wherein
   the diagnosis support information is outputted based on a result of comparing the index with a predetermined threshold value.
7) The apparatus of any one of (1) to (5), wherein
   the controller outputs the calculated index as the diagnosis support information.
8) A diagnosis support method comprising the steps of:
   receiving an input of first analytical information about nucleated red blood cells in blood of a subject, and an input of second analytical information about granulocytes in the blood of the subject or third analytical information about platelets in the blood of the subject, both of the first analytical information, and the second analytical information or the third analytical information being based on a result of detection of blood cells in the blood of the subject; calculating an index based on the first analytical information and the second analytical information or the third analytical information, by using a predetermined standard, and
   outputting diagnosis support information for supporting prognosis of Systemic Inflammatory Response Syndrome of the subject based on the calculated index.
9) The method of (8), wherein
   the outputting of the diagnosis support information is performed based on a result of comparing the index with a predetermined threshold value.
10) The method of (8), wherein
   the diagnosis support information is the index
11) The method of (8), wherein
   the calculating of the index is performed based on the first analytical information, the second analytical information, and the third analytical information.
12) The method of any one of (8) to (11), wherein
   the first analytical information, the second analytical information, and the third analytical information of which inputs are received are information based on a result of detection of blood cells in the blood of a subject showing a systemic inflammatory response, information based on a result of detection of blood cells in the blood of a subject who has been given a diagnosis of Systemic Inflammatory Response Syndrome.
13) A computer program product comprising:
   a computer readable medium; and instructions, on the computer readable medium, adapted to enable a general purpose computer to perform operations comprising:
      receiving an input of first analytical information about nucleated red blood cells in blood of a subject, and an input of second analytical information about granulocytes in the blood of the subject or third analytical information about platelets in the blood of the subject, both of the first analytical information, and the second analytical information or the third analytical information being based on a result of detection of blood cells in the blood of the subject; and
      calculating an index based on the first analytical information and the second analytical information or the third analytical information, by using a predetermined standard, and
      outputting diagnosis support information for supporting prognosis of Systemic Inflammatory Response Syndrome of the subject based on the calculated index.

### BRIEF DESCRIPTION OF THE DRAWINGS

FIG. 1 is a front view showing a schematic configuration of a blood cell counter according to an embodiment of the present invention;
FIG. 2 is a block diagram showing a configuration of a detection unit of the blood cell counter according to the embodiment of the present invention;
FIG. 3 is a schematic plan view schematically showing a configuration of a detector of the blood cell counter according to the embodiment of the present invention;
FIG. 4 is a block diagram showing a configuration of a data processing unit of the blood cell counter according to the embodiment of the present invention;
FIG. 5 is a flowchart showing a sequence of processing performed by a CPU of a data processing section of the data processing unit of the blood cell counter according to the embodiment of the present invention;
FIG. 6 shows an NRBC scattergram created by the blood cell counter according to the embodiment of the present invention;
FIG. 7 shows a DIFF scattergram created by the blood cell counter according to the embodiment of the present invention;
FIG. 8 shows a WBC/BASO scattergram created by the blood cell counter according to the embodiment of the present invention;
FIG. 9 shows an RET scattergram created by the blood cell counter according to the embodiment of the present invention;
FIG. 10 shows an enlarged view of a part of the RET scattergram created by the blood cell counter according to the embodiment of the present invention.
FIG. 11 shows ROC curves;
FIG. 12 is a flowchart showing a sequence of a calculation of an index (ICPS) performed by the CPU of the data processing section of the data processing unit of the blood cell counter according to the embodiment of the present invention;
FIG. 13 is a flowchart showing a sequence of a calculation of an index (ICPS) performed by the CPU of the data processing section of the data processing unit of the blood cell counter according to the embodiment of the present invention;
FIG. 14 shows temporal changes of an index (ICPS (NRBC#_IRF# + PLT#_IPF# + Neut# + Neut- Y + IG#)) obtained by the blood cell counter measuring the blood of a plurality of SIRS patients, the temporal changes being shown separately for an SIRS patient group in which the patients did not die and an SIRS patient group in which the patients died;
FIG. 15 shows temporal changes of a nucleated red blood cell count (NRBC#) obtained by the blood cell counter measuring the blood of a plurality of SIRS patients, the temporal changes being shown separately for an SIRS patient group in which the patients did not die and an SIRS patient group in which the patients died;
FIG. 16 is the same as FIG. 15, except that the graph in FIG. 16 has a vertical axis of score values of the nucleated red blood cell count (NRBC#) converted from the count values of FIG. 15;
FIG. 17 shows temporal changes of an immature granulocyte count (IG#) obtained by the blood cell counter measuring the blood of a plurality of SIRS patients, the temporal changes being shown separately for an SIRS patient group in which the patients did not die and an SIRS patient group in which the patients died;
FIG. 18 shows temporal changes of an index (ICPS (NRBC# + Neut#)) obtained by the blood cell counter measuring the blood of a plurality of SIRS patients, the temporal changes being shown separately for an SIRS patient group in which the patients did not die and an SIRS patient group in which the patients died;
FIG. 19 shows temporal changes of an index (ICPS (NRBC# + Neut-Y)) obtained by the blood cell counter measuring the blood of a plurality of SIRS patients, the temporal changes being shown separately for an SIRS patient group in which the patients did not die and an SIRS patient group in which the patients died;
FIG. 20 shows temporal changes of an index (ICPS (NRBC# + PLT#_IPF#)) obtained by the blood cell counter measuring the blood of a plurality of SIRS patients, the temporal changes being shown separately for an SIRS patient group in which the patients did not die and an SIRS patient group in which the patients died;
FIG. 21 shows temporal changes of an index (ICPS (NRBC#_IRF# + PLT#_IPF#)) obtained by the blood cell counter measuring the blood of a plurality of SIRS patients, the temporal changes being shown separately for an SIRS patient group in which the patients did not die and an SIRS patient group in which the patients died;
FIG. 22 shows temporal changes of an index (ICPS (NRBC# + PLT# + IG#)) obtained by the blood cell counter measuring the blood of a plurality of SIRS patients, the temporal changes being shown separately for an SIRS patient group in which the patients did not die and an SIRS patient group in which the patients died;
FIG. 23 shows temporal changes of an index (ICPS (NRBC# + PLT# + Neut#)) obtained by the blood cell counter measuring the blood of a plurality of SIRS patients, the temporal changes being shown separately for an SIRS patient group in which the patients did not die and an SIRS patient group in which the patients died; and
FIG. 24 shows temporal changes of an index (ICPS (NRBC# + PLT# + Neut-Y)) obtained by the blood cell counter measuring the blood of a plurality of SIRS patients, the temporal changes being shown separately for an SIRS patient group in which the patients did not die and an SIRS patient group in which the patients died.

### DETAILED DESCRIPTION OF THE EMBODIMENT

Hereinafter specific description will be given of a blood cell counter, a diagnosis support apparatus, a diagnosis support method, and a computer program product according to an embodiment of the present invention, with reference to the drawings.
It will be understood that the embodiment below is not intended to limit the invention defined by the claims, and that all the combinations of the features described in the embodiment are not necessarily the essential matters for means for solution.

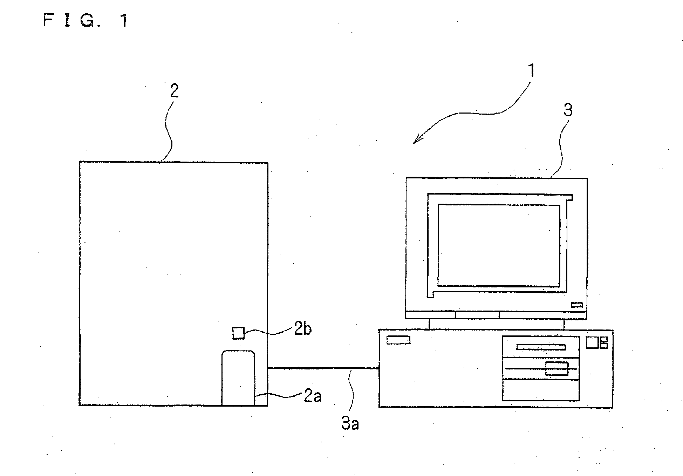

FIG. 1 is a front view showing a schematic configuration of a blood cell counter according to an embodiment of the present invention. Referring to FIG. 1, a blood cell counter 1 according to an embodiment of the present invention is an apparatus for supporting prognosis of a subject by detecting blood cells in the blood of the subject (patient) that has fallen into a certain condition of an illness (for example, a serious illness such as SIRS). The blood cell counter 1 mainly includes a detection unit 2 and a data processing unit 3. The detection unit 2 detects blood cells in the blood of the subject. The data processing unit 3 receives data containing results of the detection performed by the detection unit 2 and performs analysis processes. The blood cell counter 1 is installed, for example, in a medical institution such as a hospital or a pathology laboratory. The detection unit 2 and the data processing unit 3 are connected via a transmission cable 3a so as to be able to perform data communication therebetween. Note that the connection between the detection unit 2 and the data processing unit 3 is not limited to a direct connection formed by the transmission cable 3a. For example, the detection unit 2 and the data processing unit 3 may be connected via a dedicated line using a telephone line, a LAN, or a communication network such as the Internet.

At the lower right of the front face of the detection unit 2, there is provided a blood collection tube setting part 2a on which a blood collection tube containing the blood of a subject can be set. When an operator presses a push button switch 2b provided near the blood collection tube setting part 2a, the blood collection tube setting part 2a moves toward the operator, thereby enabling the operator to set the blood collection tube thereon. When the operator presses the push button switch 2b again after setting the blood collection tube, the blood collection tube setting part 2a moves toward the detection unit 2 to be accommodated in the detection unit 2.

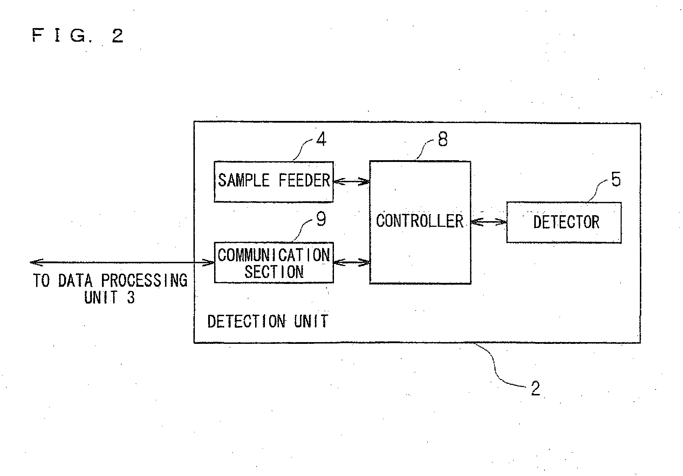

FIG. 2 is a block diagram showing a configuration of the detection unit 2 of the blood cell counter 1 according to the embodiment of the present invention.
Referring to FIG. 2, the detection unit 2 has a similar configuration to that of a main body of a conventional blood cell counter, and includes a sample feeder 4, a detector 5, a controller 8, and a communication section 9. The sample feeder 4 is a fluid unit including a chamber, a plurality of solenoid valves, a diaphragm pump, and the like. The sample feeder 4 feeds to the detector 5 a detection sample which is prepared by mixing the blood of a subject with a reagent, the detection sample being set in the detection unit 2. The controller 8 controls the operation of the components of the detection unit 2. The communication section 9 may be, for example, an RS-232C interface, a USB interface, or an Ethernet (registered trademark) interface, and transmits/receives data to/from the data processing unit 3.

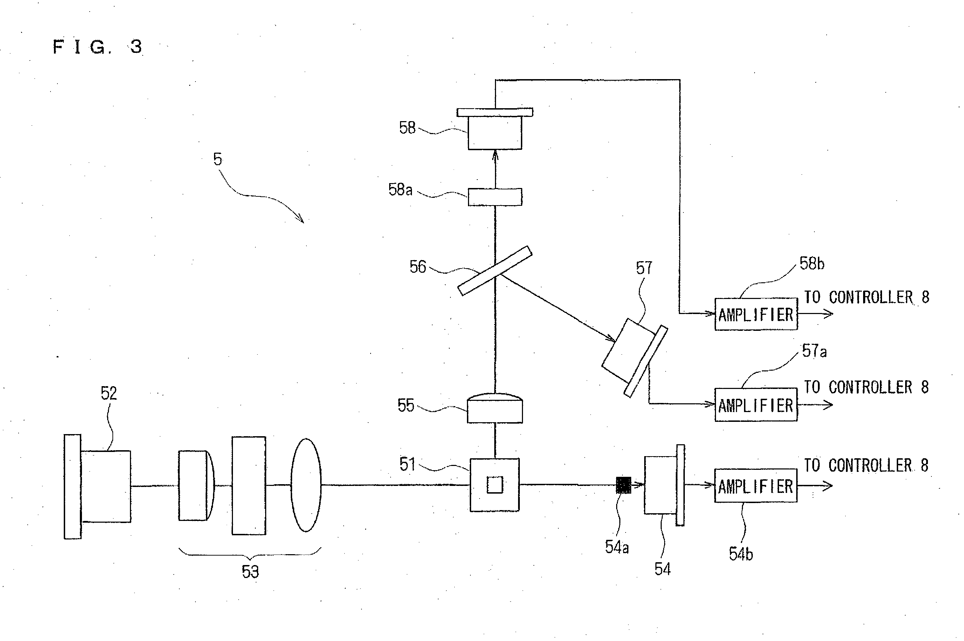

FIG. 3 is a schematic plan view schematically showing a configuration of the detector 5 of the blood cell counter 1 according to the embodiment of the present invention. Referring to FIG. 3, the detector 5 is an optical flow cytometer, and detects nucleated red blood cells (NRBC), reticulocytes (RET), mature red blood cells (RBC), white blood cells (WBC), platelets (PLT), and the like in the blood by flow cytometry using a semiconductor laser. The term "red blood cell" is used herein as categorically including all of "nucleated red blood cell (NRBC)", "reticulocyte (RET)" and "mature red blood cell (RBC)". The term "platelet" is used herein as categorically including "mature platelet" and "immature platelet". The detector 5 includes a flow cell 51 for forming a liquid flow of the detection sample. The flow cell 51 is formed from a translucent material such as quartz, glass, synthetic resin, or the like, and has a tubular shape. The flow cell 51 has a flow path therein through which the detection sample and a sheath liquid flow. The detector 5 includes a semiconductor laser light source 52, which is disposed so as to output laser light toward the flow cell 51. Between the semiconductor laser light source 52 and the flow cell 51. an illumination lens system 53 including a plurality of lenses is provided. The illumination lens system 53 collects parallel beams outputted from the semiconductor laser light source 52 to form a beam spot. An optical axis extends linearly from the semiconductor laser light source 52 and through the flow cell 51. A photodiode 54 is provided on the optical axis, such that the photodiode 54 is located on the opposite side of the flow cell 51 from the illumination lens system 53. A beam stopper 54a is provided so as to block light coming directly from the semiconductor laser light source 52.

When a detection sample flows into the flow cell 51, scattered light and fluorescence occur based on the laser light. Of the scattered light and fluorescence, the light in the irradiation (i.e., forward) direction of the laser light is photoelectrically converted by the photodiode 54. Of the light traveling along the optical axis linearly extending from the semiconductor laser light source 52, the light coming directly from the semiconductor laser light source 52 is blocked by the beam stopper 54a. Incident on the photodiode 54 is only the scattered light that travels substantially along this optical axis direction (hereinafter referred to as forward scattered light). The forward scattered light emitted from the detection sample flowing in the flow cell 51 is photoelectrically converted by the photodiode 54 into electrical signals, and each electrical signal resulting from the photoelectrical conversion (hereinafter, referred to as a forward scattered light signal) is amplified by an amplifier 54b, to be outputted to the controller 8. The intensity of the forward scattered light signal indicates the size of a blood cell.

A side condenser lens 55 is provided laterally to the flow cell 51, so as to be located in a direction on the optical axis that crosses the optical axis that linearly extends from the semiconductor laser light source 52 to the photodiode 54. The side condenser lens 55 condenses side light (i.e., light that is outputted in the direction on an optical axis that crosses the optical axis that linearly extends from the semiconductor laser light source 52 to the photodiode 54) which occurs when laser light is emitted to the detection sample passing through the flow cell 51. A dichroic mirror 56 is provided downstream from the side condenser lens 55. The light condensed by the side condenser lens 55 is separated by the dichroic mirror 56 into scattered light components and fluorescence components. In an optical axis direction in which the light reflected by the dichroic mirror 56 advances (i.e., the direction on an optical axis that crosses the optical axis passing through the side condenser lens 55 and the dichroic mirror 56), a photodiode 57 for receiving the side scattered light is provided. On the optical axis that passes through the side condenser lens 55 and the dichroic mirror 56, an optical filter 58a and a photodiode 58 for receiving side fluorescence are provided.

The light reflected by the dichroic mirror 56 is the side scattered light, and is photoelectrically converted into electrical signals by the photodiode 57. Each electrical signal resulting from the photoelectrical conversion (hereinafter referred to as a side scattered light signal) is amplified by an amplifier 57a and then outputted to the controller 8. Each side scattered light signal indicates internal information of a blood cell (the size of the nucleus, etc.). The light transmitted through the dichroic mirror 56, which is the side fluorescence, is photoelectrically converted into electrical signals by the photodiode 58 after being wavelength-selected by the optical filter 58a. Each electrical signal resulting from the photoelectrical conversion (hereinafter referred to as a side fluorescence signal) is amplified by an amplifier 58b and then outputted to the controller 8. Each side fluorescence signal indicates the degree of staining of a blood cell.

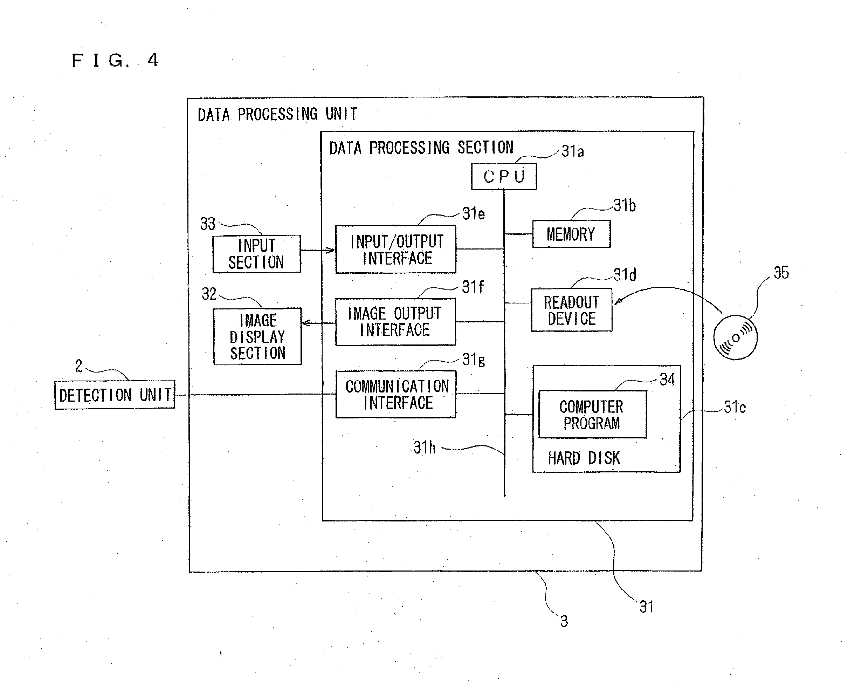

FIG. 4 is a block diagram showing a configuration of the data processing unit 3 of the blood cell counter 1 according to the embodiment of the present invention. As shown in FIG. 4, the data processing unit 3 includes at least a data processing section 31 including a CPU (Central Processing Unit) and the like, an image display section 32, and an input section 33. The data processing section 31 includes a CPU 31a, a memory 31b, a hard disk 31c, a readout device 31d, an input/output interface 31e, an image output interface 31f, a communication interface 31g, and an internal bus 31h. In the data processing section 31, the CPU 31a is connected via the internal bus 31h to each of the memory 31b, the hard disk 31c, the readout device 31d, the input/output interface 31e, the image output interface 31f, and the communication interface 31g.

The CPU 31a controls the operation of each of the above hardware components and processes data received from the detection unit 2 in accordance with a computer program 34 stored in the hard disk 31 c.

The memory 31b is structured as a volatile memory such as an SRAM, or a flash memory. To the memory 31b, a load module is loaded at the execution of the computer program 34. The memory 31b stores temporary data and the like which are generated at the execution of the computer program 34.

The hard disk 31c is structured as a fixed-type storage device or the like and is incorporated in the data processing unit 3. The computer program 34 is downloaded by the readout device 31d, which is a portable disc drive, from a portable storage medium 35 such as a DVD, a CD-ROM or the like that stores information, such as programs, data, and the like. The computer program 34 is then stored in the hard disk 31c. The computer program 34 is loaded from the hard disk 31c to the memory 31b so as to be executed. It will be understood that the computer program 34 may be a computer program downloaded via the communication interface 31g from an external computer. The hard disk 31c stores, for example, a message indicating that the severity of illness is very high and the probability of death is high, and a message indicating that the severity of illness is moderate and the probability of death is low, as diagnosis support information for supporting prognosis of a subject. The hard disk 31c also stores score thresholds (described below) for each type of analytical information, which are used for scoring the analytical information, and determination thresholds (described below), which are used for making a prognosis of a subject.

The input/output interface 3 1 e is connected to the input section 33 structured as a keyboard, a tablet, or the like. The image output interface 31 f is connected to the image display section 32 which may be a CRT monitor, an LCD, or the like.

The communication interface 31g is connected to the internal bus 31h, and performs data transmission/reception with an external computer, the detection unit 2, or the like by being connected to an external network such as the Internet, a LAN, and a WAN. For example, the above hard disk 31c is not limited to the one incorporated in the data processing unit 3, but may be an external storage medium such as an external storage or the like that is connected to the data processing unit 3 via the communication interface 31g.

Hereinafter, description is given of the operation of the blood cell counter 1 according to the embodiment of the present invention. First, the sample feeder 4 of the blood cell counter 1 aspirates blood from a blood collection tube set in the blood collection tube setting part 2a, divides the aspirated blood into four aliquots, and adds predetermined dedicated reagents to the aliquots, thereby preparing an NRBC detection sample, an RET detection sample, a DIFF detection sample, and a WBC/BASO detection sample. Note that the NRBC detection sample is prepared by subjecting the blood to a dilution process, and further to a staining process by use of a dedicated reagent for detecting nucleated red blood cells. The RET detection sample is prepared by subjecting the blood to a dilution process and further to a staining process by use of a dedicated reagent for detecting reticulocytes. The DIFF detection sample is prepared by subjecting the blood to a dilution process, to a hemolyzation process by use of a dedicated reagent for classifying white blood cells, and further to a staining process by use of a dedicated reagent for DIFF detection. The WBC/BASO detection sample is prepared by subjecting the blood to a dilution process and further to a hemolyzation process by use of a dedicated reagent for detecting white blood cells. The sample feeder 4 feeds the prepared detection samples to the flow cell 51 of the detector 5.

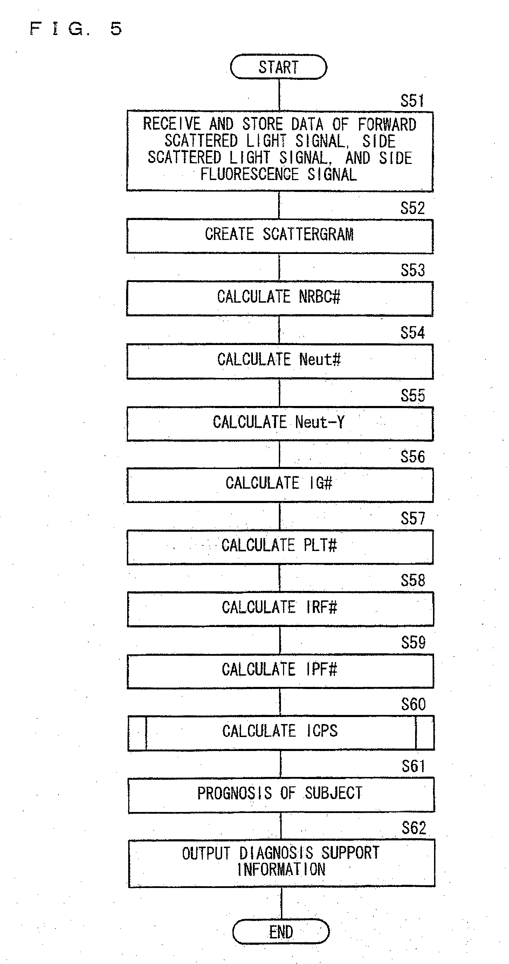

FIG. 5 is a flowchart showing a sequence of processing performed by the CPU 31a of the data processing section 31 of the data processing unit 3 of the blood cell counter 1 according to the embodiment of the present invention. First, when a detection sample is fed to the flow cell 51, the CPU 31a receives via the communication interface 31g data of forward scattered light signals, side scattered light signals, and side fluorescence signals outputted by the detector 5 of the detection unit 2, and stores the data in the memory 31b (step S51). The CPU 31a creates a plurality of scattergrams based on the data of the forward scattered light signals, the side scattered light signals, and the side fluorescence signals detected by the detector 5 and stored in the memory 31b (step S52). Specifically, in step S52, the CPU 31a creates an NRBC scattergram having a Y-axis of the intensity of forward scattered light signals and an X-axis of the intensity of side fluorescence signals of the NRBC detection sample, an RET scattergram having a Y-axis of the intensity of forward scattered light signals and an X-axis of the intensity of side fluorescence signals of the RET detection sample, a DIFF scattergram having a Y-axis of the intensity of side fluorescence signals and an X-axis of the intensity of side scattered light signals of the DIFF detection sample, and a WBC/BASO scattergram having a Y-axis of the intensity of forward scattered light signals and an X-axis of the intensity of side scattered light signals of the WBC/BASO detection sample.

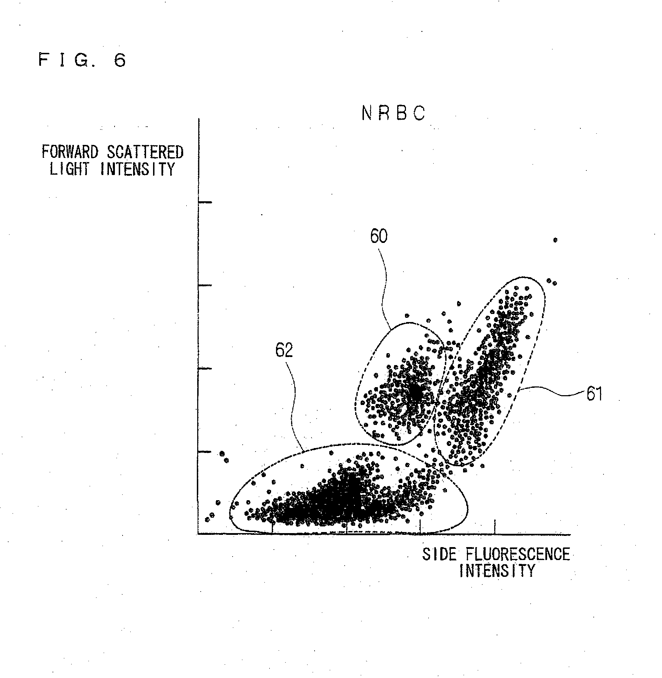

Next, the CPU 31a calculates a nucleated red blood cell count (NRBC#), which is analytical information about the nucleated red blood cells (NRBC) in the blood, by using the NRBC scattergram (step S53). FIG. 6 shows an NRBC scattergram created by the blood cell counter 1 according to the embodiment of the present invention. As shown in FIG. 6, the NRBC scattergram classifies the blood cells into three areas of a nucleated red blood cell (NRBC) area 60, a white blood cell (ABC) area 61, and a red blood cell ghost area 62. The nucleated red blood cell count (NRBC#) can be calculated by counting the number of the red blood cells contained in the nucleated red blood cell (NRBC) area 60.

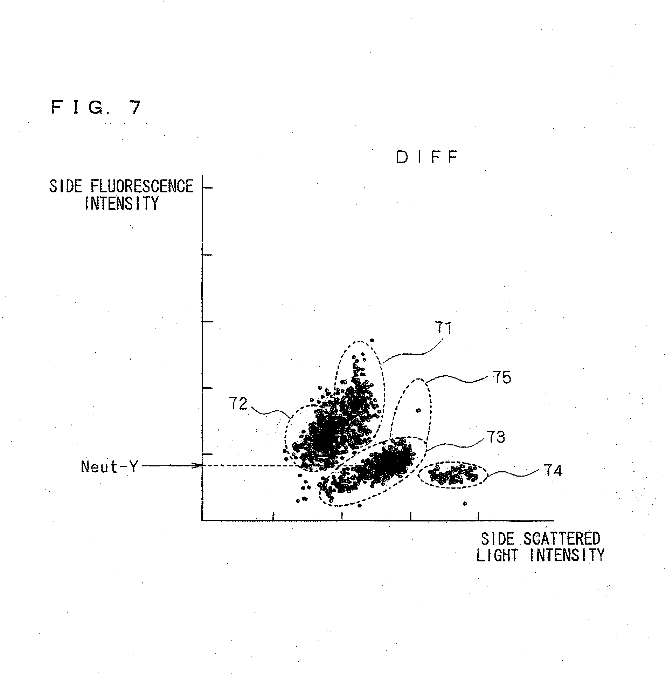

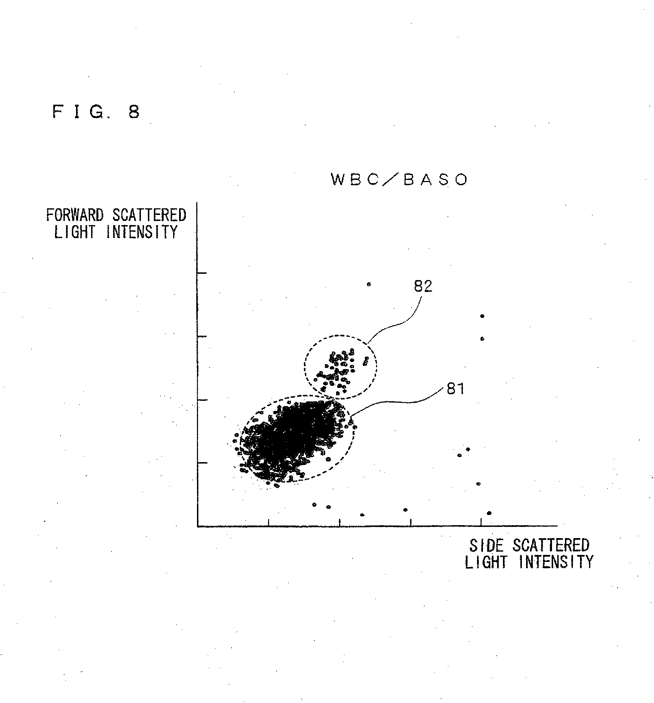

Next, the CPU 31a calculates a neutrophil count (Neut#), which is analytical information about the granulocytes in the blood, by using the DIFF scattergram and the WBC/BASO scattergram (step S54). Note that the term "granulocyte" is used herein as categorically including both of "mature granulocyte" and "immature granulocyte". The "mature granulocyte" categorically includes neutrophil (Neut), eosinophil (EO), and basophil (BASO). FIG. 7 shows a DIFF scattergram created by the blood cell counter 1 according to the embodiment of the present invention. FIG. 8 shows a WBC/BASO scattergram created by the blood cell counter 1 according to the embodiment of the present invention. As shown in FIG. 7, the DIFF scattergram classifies the white blood cells (WBC) into five areas of a monocyte (MONO) area 71, a lymphocyte (LYMPH) area 72, a neutrophil (Neut) + basophil (BASO) area 73, an eosinophil (EO) area 74, and an immature granulocyte (IG) area 75. Accordingly, the sum of the number of the neutrophils (Neut) and the number of the basophils (BASO) can be calculated by counting the number of the white blood cells (WBC) in the neutrophil (Neut) + basophil (BASO) area 73, based on the DIFF scattergram.

In order to calculate the neutrophil count (Neut#) from the sum of the number of the neutrophils (Neut) and the number of the basophils (BASO), the number of the basophils (BASO) is determined by using the WBC/BASO scattergram. As shown in FIG. 8, the WBC/BASO scattergram classifies the white blood cells (WBC) into two areas of a monocyte (MONO) + lymphocyte (LYMPH) + neutrophil (Neut) + eosinophil (EO) area 81 and a basophil (BASO) area 82. Accordingly, the number of the basophils (BASO) can be calculated by counting the number of the white blood cells (WBC) in the basophil (BASO) area 82, based on the WBC/BASO scattergram. The neutrophil count (Neut#) can be calculated by subtracting the number of the basophils (BASO) calculated based on the WBC/BASO scattergram from the sum of the number of the neutrophils (Neut) and the number of the basophils (BASO) calculated based on the DIFF scattergram.

Next, the CPU 31a calculates a value indicating the degree of staining of the neutrophils (Neut-Y), which is also analytical information about the granulocyte in the blood, by using the DIFF scattergram (step S55). Specifically, the value indicating the degree of staining of the neutrophils (Neut-Y) can be calculated by calculating, based on the DIFF scattergram, the average value of the side fluorescence intensities of all the blood cells contained in the neutrophil (Neut) + basophil (BASO) area 73 (i.e., neutrophils (Neut) and basophils (BASO)). Although the calculated value indicating the degree of staining of the neutrophils (Neut-Y) includes an influence of side scattered light intensities of the basophil (BASO), the number of the basophils (BASO) is small and therefore the influence is small.

Next, the CPU 31a calculates an immature granulocyte count (IG#), which is also analytical information about the granulocytes in the blood, by using the DIFF scattergram (step S56). Specifically, the immature granulocyte count (IG#) can be calculated by counting the number of the white blood cells (WBC) in the immature granulocyte (IG) area 75, based on the DIFF scattergram.

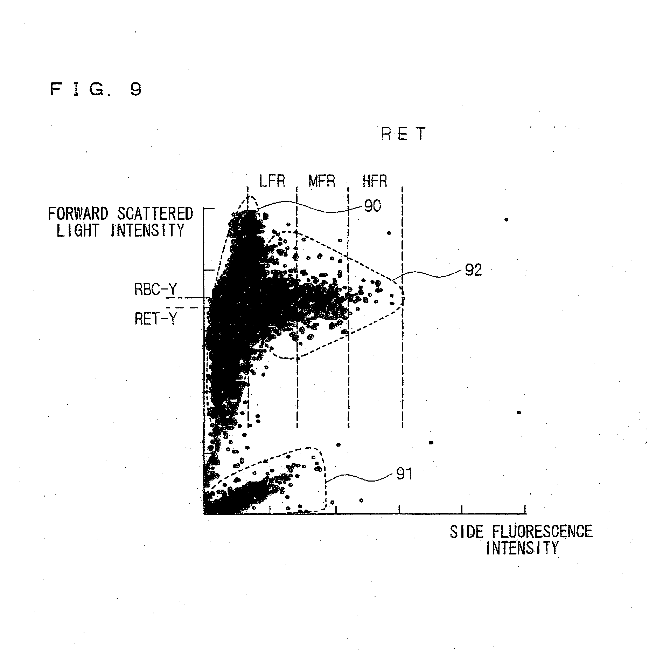

Next, the CPU 31a calculates a mature platelet count (PLT#), which is analytical information about the platelets in the blood, by using the RET scattergram (step S57). FIG. 9 shows an RET scattergram created by the blood cell counter 1 according to the embodiment of the present invention. As shown in FIG. 9, the RET scattergram classifies the blood into three areas of a mature red blood cell (RBC) area 90, a platelet (PLT) area 91, and a reticulocyte (RET) area 92. The mature platelet count (PLT#) can be calculated by counting the number of the platelets in the platelet (PLT) area 91 based on the RET scattergram.

Next, the CPU 31a calculates an immature reticulocyte count (IRF#), which is analytical information about the immature reticulocytes in the blood, by using the RET scattergram (step S58). Specifically, the reticulocyte (RET) area 92 is divided into three areas of a low fluorescence intensity area LFR, a moderate fluorescence intensity area MFR, and a high fluorescence intensity area HFR, in accordance with the side fluorescence intensities. The immature reticulocyte count (IRF#) can be calculated by counting the number of the reticulocytes contained in the moderate fluorescence intensity area MFR and the number of the reticulocytes contained in the high fluorescence intensity area HFR, and then totaling the counted numbers.

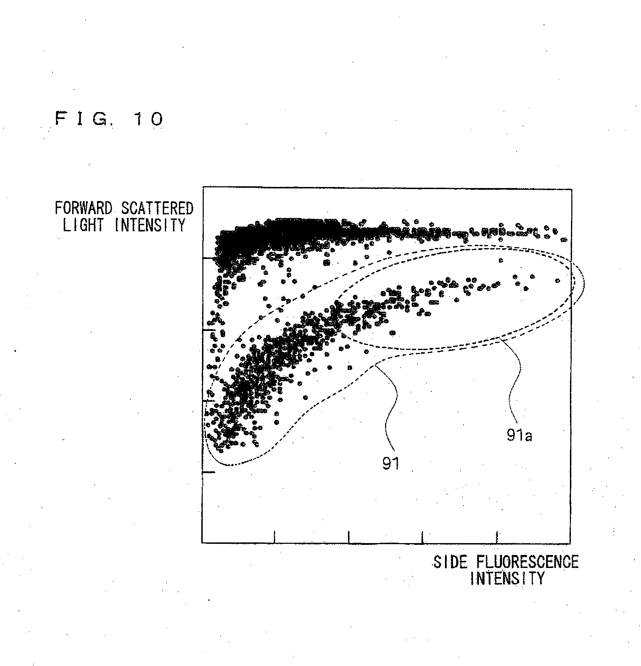

Next, by using the RET scattergram, the CPU 31a calculates the number of the immature platelets (i.e., an immature platelet count (IPF#)) in the platelet (PLT) area 91, which is analytical information about the immature platelets in the blood (step S59). The immature platelets are large and are stained well by a nucleic acid staining fluorescent dye and appear in an area of high side fluorescence intensity (IPF demarcation area). FIG. 10 shows an enlarged view of a part of the RET scattergram created by the blood cell counter 1 according to the embodiment of the present invention. As shown in FIG. 10, the platelet (PLT) area 91 can be divided into an IPF fraction area 91a and an area other than the IPF fraction area 91a. Accordingly, the immature platelet count (IPF#) can be calculated by counting the number of the platelets in the IPF fraction area 91 a, based on the RET scattergram. Note that the mature platelet count (PLT#) calculated in step S57 includes the immature platelet count (IPF#). However, the immature platelet count is sufficiently smaller than the mature platelet count. Therefore, in the embodiment, the number of the platelets in the platelet (PLT) area 91 is considered as the mature platelet count (PLT#). It will be understood that the value obtained by subtracting the immature platelet count (IPF#) from the number of the platelets in the platelet (PLT) area 91 may be used as the mature platelet count (PLT#).

Next, the CPU 31a sets a score value by using a predetermined standard for each type of the analytical information (Neut#, Neut-Y, IG#, NRBC#_IRF#, and PLT#_IPF#) based on the types of analytical information (NRBC#, Neut#, Neut-Y, IG#, PLT#. IRF#, and IPF#) obtained by calculations in step S53 to step S59, and calculates an index by totaling the set score values (step S60). Here, the analytical information (NRBC#_IRF#) is analytical information based on the nucleated red blood cell count (NRBC#) and the immature reticulocyte count (IRF#). The analytical information (PLT#_IPF#) is analytical information based on the mature platelet count (PLT#) and the immature platelet count (IPF#). The index calculated in step S60 is hereinafter referred to as an index (ICPS: Intensive Care Prognostic Score). The score value for each type of the analytical information is set by comparing the value of each type of analytical information obtained in step S53 to step S59 with the corresponding score thresholds stored in advance in the hard disk 31c.

Now, description is given of a method of determining a score threshold. A score threshold is determined in advance, for example, in accordance with a method described below by a developer or the like of the blood cell counter 1, and stored in the hard disk 31c. The embodiment of the present invention uses an ROC (Receiver Operating Characteristic) analysis which uses ROC curves. Generally, the ROC analysis is used for evaluation of the accuracy of screening tests and the like and for comparison of conventional tests with new tests. An ROC curve is drawn on a graph having a vertical axis of sensitivity (%) and a horizontal axis of 100-specificity (%). Note that the sensitivity (%) is a percentage of the subjects who have been given a prognosis that the severity of a certain illness is very high and the probability of death is high in the subjects who died of the illness. The specificity (%) is a percentage of the subjects who have been given a prognosis that the severity of a certain illness is moderate and the probability of death is low in the subjects who did not die of the illness.

An ROC curve is created by a developer or the like of the blood cell counter 1 in the method as described below. When the immature granulocyte count (IG#) is used as a type of analytical information, for example, such a developer or the like sets a threshold value, and then makes a prognosis of a subject, based on the threshold value and the immature granulocyte count (IG#) of the subject. This prognosis is performed on a plurality of subjects. Then, the developer or the like calculates a sensitivity (%) and a specificity (%) based on the prognosis results of the plurality of subjects. Further, the developer or the like plots a mark (point) at a position corresponding to the calculated sensitivity (%) and the calculated specificity (%) on the graph having the vertical axis of sensitivity (%) and the horizontal axis of 100-specificity (%). That is, the mark (point) corresponds to the sensitivity (%) and the specificity (%) for the set threshold value. The developer or the like repeats the prognosis, the calculation, and the marking described above while sequentially changing the threshold values. Then, the developer or the like draws a curve that approximates a plurality of marks (points) plotted on the graph. This curve is an ROC curve.

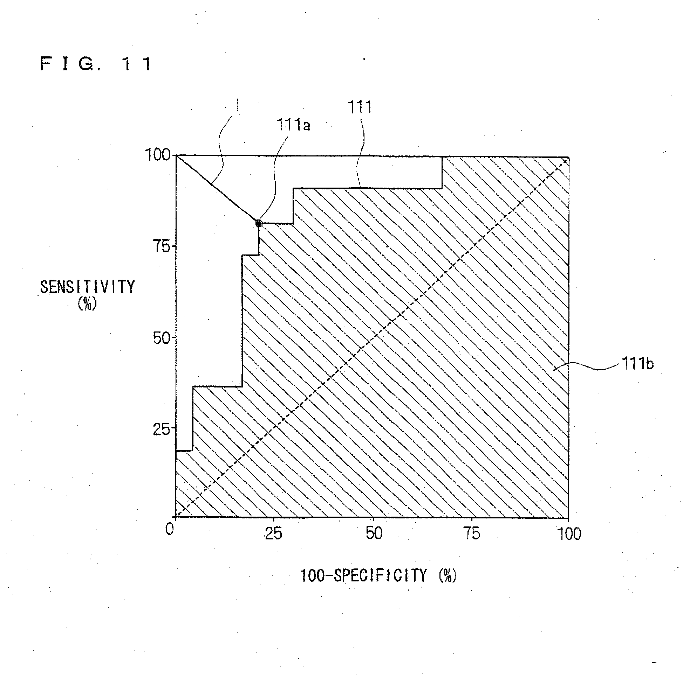

FIG. 11 shows ROC curves. The graph shown in FIG. 11 has a vertical axis of sensitivity and a horizontal axis of 100-specificity. A curve 111 is an ROC curve of the immature granulocyte count (IG#). On the curve 111, a point 11a at which a distance 1 from the coordinates (0, 100) to the curve 111 is shortest is the optimum point of the balance between the sensitivity and the specificity. The threshold value that is set when the point 111a is marked is the best cutoff value. Of the areas surrounded by the curve 111 and the axes, the one on the side of the coordinates (100, 0) is an AUC (Area Under the Curve) 111b of the immature granulocyte count (IG#).

Description is now returned to the method of determining a score threshold. First, the developer or the like obtains the best cutoff value based on the ROC curve, and designates the best cutoff value as a first score threshold. Then, the developer or the like designates as a second score threshold the threshold value set for a point at which the specificity is 85% based on the ROC curve. Further, the developer or the like designates as a third score threshold the threshold value set for a point at which the specificity is 95% based on the ROC curve. For example, the first to the third score thresholds of the immature granulocyte count (IG#) are 150/µl, 500/µl, and 1000/µl, respectively. The first to the third score thresholds of the neutrophil count (Neut#) are 11000/µl, 15000/µl, 22000/µl, respectively. The first to third score thresholds of the value indicating the degree of staining of the neutrophils (Neut-Y) are 480, 500, and 550. The first to third score thresholds of the platelet count (PLT#) are 150×10³/µl, 100×10³/µl, and 50×10³/µl. Score thresholds of the NRBC#_IRF# and the PLT#_IPF# are also determine by the developer or the like of the blood cell counter 1 in the same manner as above, and are stored in the hard disk 31c.

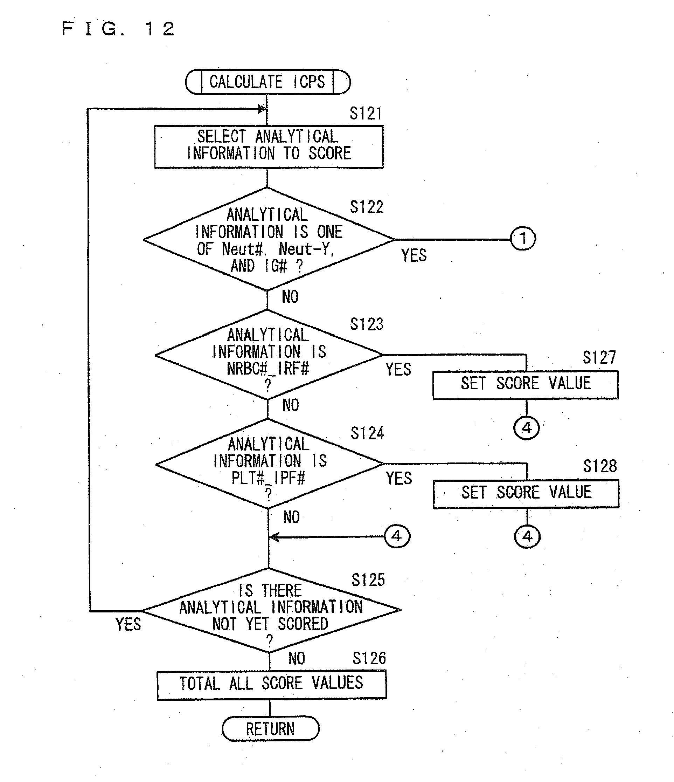

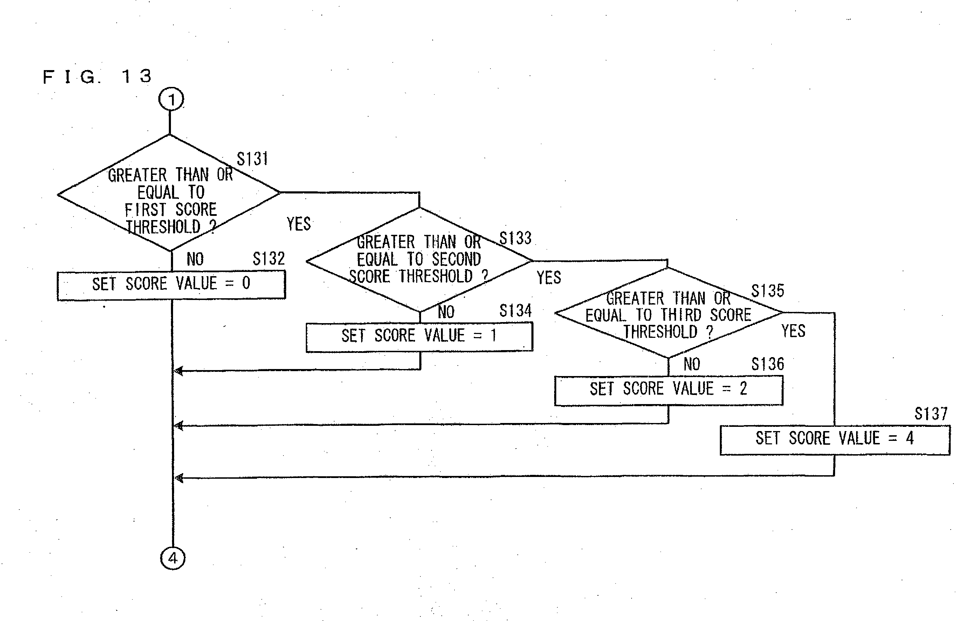

Hereinafter, description is given of processing in which the CPU 31a sets a score value for each type of analytical information by using the above described score thresholds stored in the hard disk 31c in advance, and calculates an index (ICPS) by totaling the set score values. FIGS. 12 and 13 are a flowchart showing a sequence of calculation of an index (ICPS) performed by the CPU 31a of the data processing section 31 of the data processing unit 3 of the blood cell counter 1 according to the embodiment of the present invention. The CPU 31a selects a type of analytical information to be scored from the types of analytical information obtained by the calculation in step S53 to step S59 in FIG. 5, (step S121). The CPU 31a determines whether the type of analytical information selected in step S121 is one of the neutrophil count (Neut#), the value indicating the degree of staining of the neutrophils (Neut-Y), and the immature granulocyte count (IG#) (step S122). When the CPU 31a has determined that the type of analytical information selected in step S121 is one of the neutrophil count (Neut#), the value indicating the degree of staining of the neutrophils (Neut-Y), and the immature granulocyte count (IG#) (step S122: YES), the CPU 31a advances the processing to step S131 in FIG. 13. Now, description is given of a case where the type of analytical information selected in step S121 is the neutrophil count (Neut#), for example. The CPU 31a determines whether the neutrophil count (Neut#) calculated in step S54 is greater than or equal to the first score threshold (step S131). When the CPU 31a has determined that the neutrophil count (Neut#) calculated in step S54 is not greater than or equal to the first score threshold (step S131: NO), the CPU 31a sets the score value of the neutrophil count (Neut#) calculated in step S54 at "0 (zero)" (step S132).

When the CPU 31a has determined that the neutrophil count (Neut#) calculated in step S54 is greater than or equal to the first score threshold (step S131: YES), the CPU 31a determines whether the neutrophil count (Neut#) calculated in step S54 is greater than or equal to the second score threshold (step S133). When the CPU 31a has determined that the neutrophil count (Neut#) calculated in step S 54 is not greater than or equal to the second score threshold (step S133: NO), the CPU 31a sets the score value of the neutrophil count (Neut#) calculated in step S54 at "1" (step S134).

When the CPU 31a has determined that the neutrophil count (Neut#) calculated in step S54 is greater than or equal to the second score threshold (step S133: YES), the CPU 31a determines whether the neutrophil count (Neut#) calculated in step S54 is greater than or equal to the third score threshold (step S135). When the CPU 31a has determined that the neutrophil count (Neut#) calculated in step S54 is not greater than or equal to the third score threshold (step S135: NO), the CPU 31a sets the score value of the neutrophil count (Neut#) calculated in step S54 at "2" (step S136). When the CPU 31a has determined that the neutrophil count (Neut#) calculated in step S54 is greater than or equal to the third score threshold (step S135: YES), the CPU 31a sets the score value of the neutrophil count (Neut#) calculated in step S54 at "4" (step S137). Then the CPU 31a advances the processing to step S125 in FIG. 12.

When the CPU 31a has determined that the type of analytical information selected in step S121 is none of the neutrophil count (Neut#), the value indicating the degree of staining of the neutrophils (Neut-Y), and the immature granulocyte count (IG#) (step S122: NO), the CPU 31a determines whether the type of analytical information selected in step S121 is the NRBC#_IRF# (step S123). When the CPU 31a has determined that the type of analytical information selected in step S121 is the NRBC#_IRF# (step S123: YES), the CPU 31a advances the processing to step S127.

In step S127, first, the nucleated red blood cell count (NRBC#) is scored. In the hard disk 31c, stored are the first and the second score thresholds described above, and a third score threshold which is a threshold value set for a point at which the specificity is 90%, and a fourth score threshold which is a threshold value set for a point at which the specificity is 95%. Now, the CPU 31a scores the nucleated red blood cell count (NRBC#) in a similar manner to that in steps S131 to S137. In this case, when the nucleated red blood cell count (NRBC#) is greater than or equal to the third score threshold and less than the fourth score threshold, the score value is set at "3"; and when the nucleated red blood cell count (NRBC#) is greater than or equal to the fourth score threshold, the score value is set at "4". In the hard disk 31c, further stored are two threshold values of 15/µl and 50/µl as score thresholds for the IRF#. When the value of IRF# obtained in step S58 is less than 15/µl or greater than or equal to 50/µl, "2" is added to the score value set for the nucleated red blood cell count (NRBC#). The score value obtained in this manner is set as the score value of the NRBC#_IRF#.
Then, the CPU 31a advances the processing to step S125.

When the CPU 31a has determined that the type of analytical information selected in step S121 is not the NRBC#_IRF# (step S123: NO), the CPU 31a determines whether the type of analytical information selected in step S121 is the PLT#_IPF# (step S124). When the CPU 31a has determined that the type of analytical information selected in step S121 is not the PLT#_IPF# (step S124: NO), the CPU 31a advances the processing to step S125. When the CPU 31a has determined that the type of analytical information selected in step S121 is the PLT#_IPF# (step S124: YES), the CPU 31a advances the processing to step S128.

In the hard disk 31c, stored are score thresholds of 50×10³ /µl, 100×10³ /µl, and 150×10³ /µl for the platelet count (PLT#), and a score threshold of 5000/µl for the immature platelet count (IPF#). These score thresholds are set based on past statistical data. In step S128, the CPU 31a sets a score value for the PLT#_IPF# based on these score thresholds. Specifically, when the platelet count (PLT#) is greater than or equal to 150×10³ /µl, the score value is set at "0". When the platelet count (PLT#) is greater than or equal to 100×10³ /µl and less than 150×10³ /µl and the immature platelet count (IPF#) is less than 5000/µl, the score value is set at "1". Also when the platelet count (PLT#) is greater than or equal to 50×10³ /µl and less than 100×10³ /µl and the immature platelet count (IPF#) is greater than or equal to 5000/µl, the score value is set at "1". When the platelet count (PLT#) is less than 50×10³ /µl and the immature platelet count (IPF#) is greater than or equal to 5000 /µl, the score value is set at "2". When the platelet count (PLT#) is greater than or equal to 50×10³ /µl and less than 100×10³ /µl and the immature platelet count (IPF#) is less than 5000 /µl, the score value is set at "3". When the platelet count (PLT#) is less than 50×10³ /µl and the immature platelet count (IPF#) is less than 5000/µl, the score value is set at "4".

The CPU 31a determines whether there is a type of analytical information that has not yet been scored among the types of analytical information obtained by the calculation in step S53 to step S59 in FIG. 5 (step S125). When the CPU 31a has determined that there is a type of analytical information that has not yet been scored among the types of analytical information obtained by the calculation in step S53 to step S59 in FIG. 5(step S125: YES), the CPU 31a returns the processing to step S121. When the CPU 31a has determined that all the types of analytical information obtained by the calculation in step S53 to step S59 in FIG. 5 have been scored (step S125: NO), the CPU 31a calculates an index (ICPS) by totaling the score values that have been set for the respective types of analytical information (step S126). Note that the method of totaling the score values set for the respective types of analytical information so as to calculate an index (ICPS) is not limited to the method of simply totaling the score values set for the respective types of analytical information. Alternatively, the score value set for each type of analytical information may be plugged into a predetermined formula for calculating an index (ICPS). For example, weights may be assigned to the score values set for the respective types of analytical information as appropriate, and then the weighted score values may be totaled.

Returning to FIG. 5, the CPU 31a makes a prognosis of a subject based on the index (ICPS) calculated in step S60 (step S61). As a prognosis of the subject based on the index (ICPS), the CPU 31a compares the index (ICPS) with a determination threshold stored in the hard disk 31c; and determines that the severity of illness is very high and the probability of death is high if the index (ICPS) is greater than or equal to the determination threshold, and determines that the severity of illness is moderate and the probability of death is low if the index (ICPS) is less than the determination threshold.

Now description is given of the fact that it is possible to determine based on the index (ICPS) calculated in step S60 whether the severity of illness is very high and the probability of death is high, or the severity of illness is moderate and the probability of death is low, which determination is a prognosis of a subject. Further, description is given of the method of determining a determination threshold to be compared with an index (ICPS). Note that such determination thresholds are determined in advance by a developer or the like of the blood cell counter 1 and are stored in the hard disk 31c. Each index (ICPS) described below is calculated by scoring in the above-described manner each type (i.e., "***") of analytical information as indicated in an index (ICPS (*** + ***) and then totaling the respective scores.

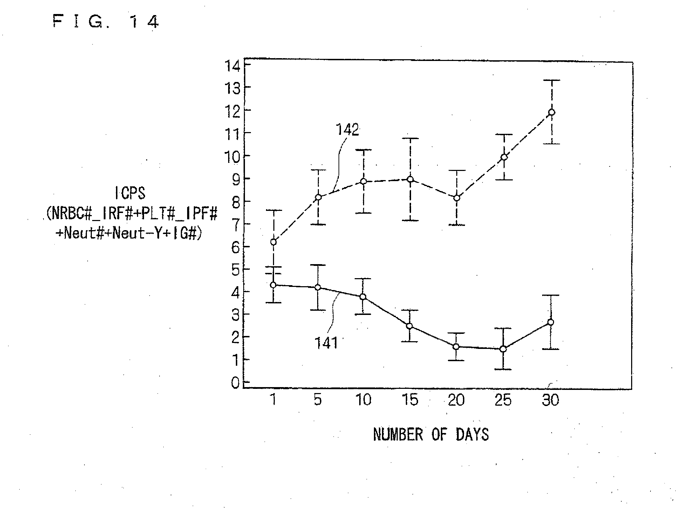

FIG. 14 shows temporal changes of an index (ICPS (NRBC#_IRF# + PLT#_IPF# + Neut# + Neut-Y + IG#)) obtained by the blood cell counter 1 measuring the blood of a plurality of SIRS patients, the temporal changes being shown separately for an SIRS patient group in which the patients did not die and an SIRS patient group in which the patients died. The graph in FIG. 14 has a horizontal axis of the number of days since a diagnosis of SIRS is made, and a vertical axis of an index (ICPS (NRBC#_IRF# + PLT#_IPF# + Neut# + Neut-Y + IG#)) which is calculated by scoring each of NRBC#_IRF#, PLT#_IPF#, Neut#, Neut-Y, and IG# and then totaling the respective scores. A line 141 shows the average value of the indices (ICPS (NRBC#_IRF# + PLT#_IPF# + Neut# + Neut-Y + IC#)) of the SIRS patient group in which the patients did not die. A line 142 shows the average value of the indices (ICPS (NRBC#_IRF# + PLT#_IPF# + Neut# + Neut-Y + IG#)) of the SIRS patient group in which the patients died. Each error bar attached to the lines 141 and 142 shows the highest value and the lowest value of an index (ICPS (NRBC#_IRF# + PLT#_IPF# + Neut# + Neut-Y + IG#)).

Most of the indices (ICPS (NRBC#_IRF# + PLT#_IPF# + Neut# + Neut-Y + IG#)) indicated by the line 141 are not greater than "5", and most of the indices (ICPS (NRBC#_IRF# + PLT#_IPF# + Neut# + Neut-Y + IG#)) indicated by the line 142 are greater than "5". Therefore, "5" can be designated as the determination threshold for determining whether the severity of SIRS is very high and the probability of death is high, or the severity of SIRS is moderate and the probability of death is low. That is, if an index (ICPS (NRBC#_IRF# + PLT#_IPF# + Neut# + Neut-Y + IG#)) is calculated by using the blood cell counter 1 according to the embodiment of the present invention, and if the calculated index (ICPS (NRBC#_IRF# + PLT#_IPF# + Neut# + Neut-Y + IG#)) is greater than or equal to "5", it is possible to make a prognosis that the severity of illness is very high and the probability of death is high. On the other hand, if the index (ICPS (NRBC#_IRF# + PLT#_IPF# + Neut# + Neut-Y + IG#)) is less than "5", it is possible to make a prognosis that the severity of illness is moderate and the probability of death is low.

Description is now returned to the output process of the diagnosis support information performed by the CPU 31a (see FIG. 5). The CPU 31a reads diagnosis support information from the hard disk 31c, based on the comparison result in step S61, and outputs the diagnosis support information via the image output interface 31f to the image display section 32, and via the communication interface 31g to another computer, printer, or the like (step S62). Specifically, in step S62, if the prognosis result of the subject in step S61 is a determination that the severity of illness is very high and the probability of death is high (that is, the index (ICPS) is greater than or equal to the determination threshold), the CPU 31a reads from the hard disk 31c the message indicating that the severity of illness is very high and the probability of death is high, to be outputted as diagnosis support information. On the other hand, in step S62, if the prognosis result of the subject in step S61 is a determination that the severity of illness is moderate and the probability of death is low (that is, the index (ICPS) is less than the determination threshold), the CPU 31a reads from the hard disk 31c the message indicating that the severity of illness is moderate and the probability of death is low, to be outputted as diagnosis support information.

Now, description is given of whether it is possible to make a prognosis in a case, which is a comparative example, where either the nucleated red blood cell count or the immature granulocyte count is used alone as a type of analytical information for calculating an index (ICPS).

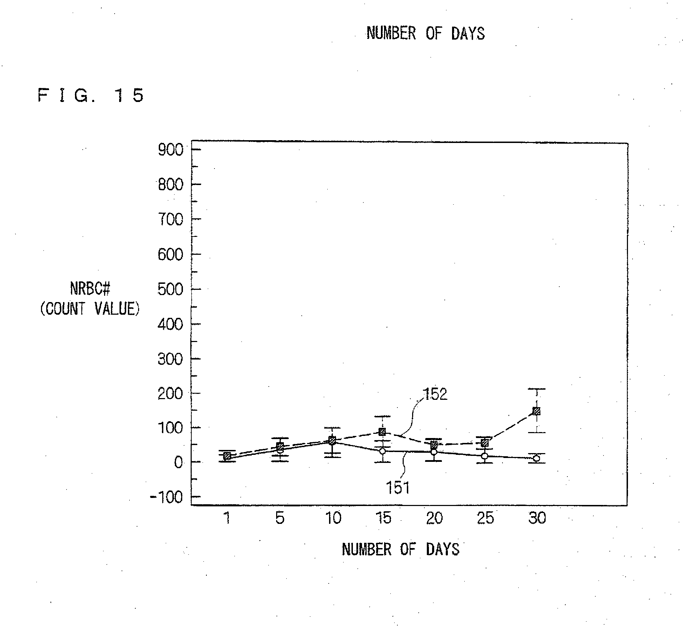

FIG. 15 shows temporal changes of a nucleated red blood cell count (NRBC#) obtained by the blood cell counter 1 measuring the blood of a plurality of SIRS patients, the temporal changes being shown separately for an SIRS patient group in which the patients did not die and an SIRS patient group in which the patients died. The graph in FIG. 15 has a horizontal axis of the number of days since a diagnosis of SIRS is made, and a vertical axis of count values of the nucleated red blood cell count (NRBC#). A line 151 shows the average value of the nucleated red blood cell counts (NRBC#) of the SIRS patient group in which the patients did not die. A line 152 shows the average value of the nucleated red blood cell counts (NRBC#) of the SIRS patient group in which the patients died. Each error bar attached to the lines 151 and 152 shows the highest value and the lowest value of a count value of the nucleated red blood cell count (NRBC#).

As shown in FIG. 15, since the line 151 and the line 152 cannot be separated by a threshold value from the day on which a diagnosis of SIRS is made to the 25th day, whether the severity of illness is very high and the probability of death is high, or the severity of illness is moderate and the probability of death is low cannot be determined by using the count values of the nucleated red blood cell count (NRBC#) alone. On the other hand, when the graphs of FIG. 14 and FIG. 15 are compared, it will be understood that earlier prognosis support can be realized if an index (ICPS (NRBC#_IRF# + PLT#_IPF# + Neut# + Neut-Y + IG#)) according to the embodiment of the present invention is used than in a case where the nucleated red blood cell count (NRBC#) alone is used.

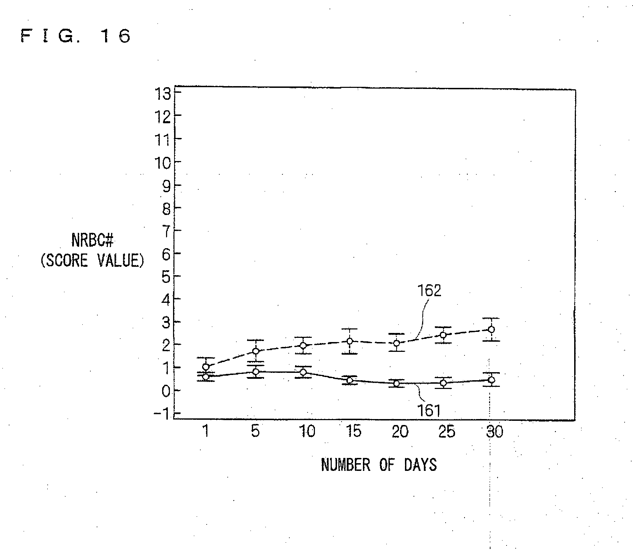

FIG. 16 is the same as FIG. 15, except that the graph in FIG. 16 has a vertical axis of score values of the nucleated red blood cell count (NRBC#) converted from the count values of the FIG. 15. For the conversion of the count values into the score values, the same method as that for scoring the nucleated red blood cell count (NRBC#) in step S127 is used. The graph in FIG. 16 has a horizontal axis of the number of days since a diagnosis of SIRS is made, and a vertical axis of score values of the nucleated red blood cell count (NRBC#). A line 161 shows the average value of the score values of the nucleated red blood cell count (NRBC#) of the SIRS patient group in which the patients did not die. A line 162 shows the average value of the score values of the nucleated red blood cell count (NRBC#) of the SIRS patient group in which the patients died. Each error bar attached to the lines 161 and 162 shows the highest value and the lowest value of a score value of the nucleated red blood cell count (NRBC#).

As shown in FIG. 16, since the line 161 and the line 162 are very near each other from the day on which a diagnosis of SIRS is made to the 5th day, the line 161 and the line 162 cannot be separated by a threshold value. Therefore, whether the severity of SIRS is very high and the probability of death is high, or the severity of SIRS is moderate and the probability of death is low, cannot be determined by using the score values of the nucleated red blood cell count (NRBC#) alone. On the other hand, when FIG. 14 and FIG. 16 are compared, it will be understood that earlier prognosis support can be realized if a determination is performed of whether the severity of illness is very high and the probability of death is high or the severity of illness is moderate and the probability of death is low by using an index (ICPS (NRBC# + Neut#)) according to the embodiment of the present invention, than in a case where the score values of the nucleated red blood cell count (NRBC#) alone is used.

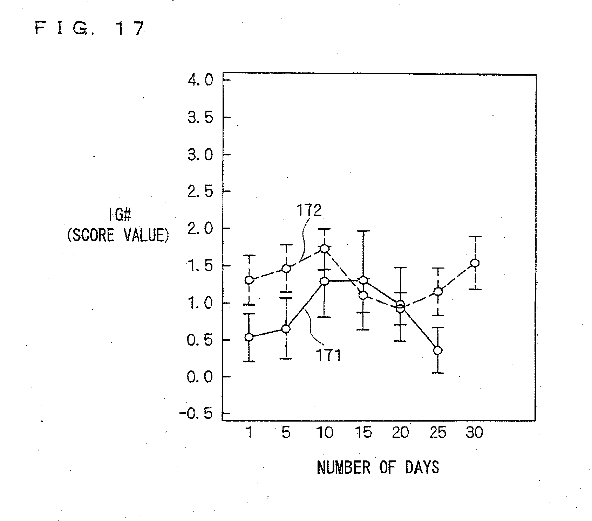

FIG. 17 shows temporal changes of an immature granulocyte count (IG#) obtained by the blood cell counter 1 measuring the blood of a plurality of SIRS patients, the temporal changes being shown separately for an SIRS patient group in which the patients did not die and an SIRS patient group in which the patients died. The graph in FIG. 17 has a horizontal axis of the number of days since the day on which a diagnosis of SIRS is made and a vertical axis of score values of the immature granulocyte count (IG#). A line 171 shows the average value of the score values of the immature granulocyte count (IG#) of the SIRS patient group in which the patients did not die. A line 172 shows the average value of the score values of the immature granulocyte count (IG#) of the SIRS patient group in which the patients died. Each error bar attached to the lines 171 and 172 shows the highest value and the lowest value of a score value of the immature granulocyte count (IG#).

As shown in FIG. 17, the line 171 crosses the line 172. Therefore, whether the severity of SIRS is very high and the probability of death is high, or the severity of SIRS is moderate and the probability of death is low, cannot be determined by using the score values of the immature granulocyte count (IG#) alone.

Note that the embodiment uses all the types of analytical information (Neut#, Neut-Y, IG#, NRBC#_IRF#, and PLT#_IPF#) for calculation of an index (ICPS). However, it is not necessary to use all the types of analytical information. Alternatively, an index (ICPS) may be obtained by selecting two or more types of analytical information from all the types of analytical information above, scoring the selected two or more types of analytical information, and totaling the score values. Further, instead of scoring the NRBC#_IRF#, the nucleated red blood cell count (NRBC#) may be scored. In this case, the nucleated red blood cell count (NRBC#) may be scored by using the above-described first to third score thresholds and by the same method as in step S131 to step S 137. Still further, instead of scoring the PLT#_IPF#, the platelet count (PLT#) may be scored. Also in this case, the platelet count (PLT#) may be scored by using the above-described first to third score thresholds and by the same method as in step S131 to step S137.

Hereinafter, description is given of the fact that the combination of types of analytical information used for calculation of an index (ICPS) can be changed.

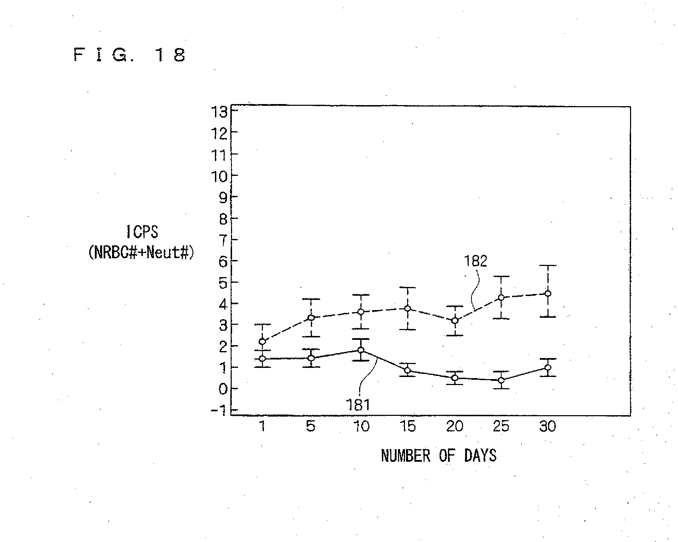

FIG. 18 shows temporal changes of an index (ICPS (NRBC# + Neut#)) obtained by the blood cell counter 1 measuring the blood of a plurality of SIRS patients, the temporal changes being shown separately for an SIRS patient group in which the patients did not die and an SIRS patient group in which the patients died. The graph in FIG. 18 has a horizontal axis of the number of days since the day on which a diagnosis of SIRS is made, and a vertical axis of an index (ICPS (NRBC# + Neut#)) which is calculated by scoring each of NRBC# and Neut # and then totaling the respective score values. A line 181 shows the average value of the indices (ICPS (NRBC# + Neut#)) of the SIRS patient group in which the patients did not die. A line 182 shows the average value of the indices (ICPS [NRBC# + Neut#)) of the SIRS patient group in which the patients died. Each error bar attached to the lines 181 and 182 shows the highest value and the lowest value of an index (ICPS (NRBC# + Neut#)).

Most of the indices (ICPS (NRBC# + Neut#)) indicated by the line 181 are not greater than "2", and most of the indices (ICPS (NRBC# + Neut#)) indicated by the line 182 are greater than "2". Therefore, "2" can be designated as the determination threshold for determining whether the severity of SIRS is very high and the probability of death is high, or the severity of SIRS is moderate and the probability of death is low.

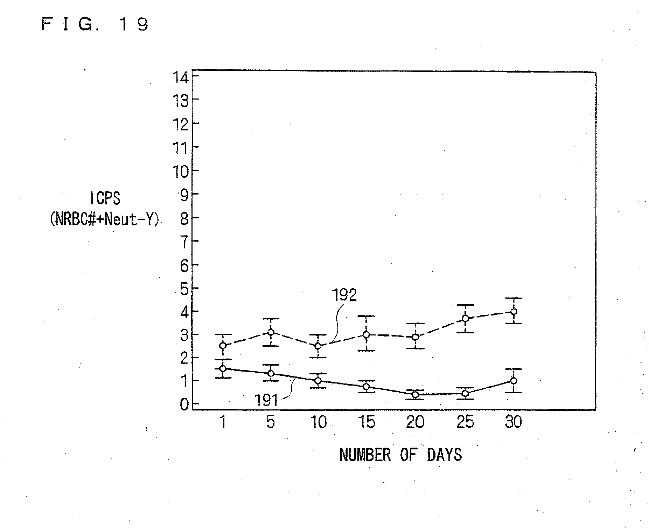

FIG. 19 shows temporal changes of an index (ICPS (NRBC# + Neut-Y)) obtained by the blood cell counter 1 measuring the blood of a plurality of SIRS patients, the temporal changes being shown separately for an SIRS patient group in which the patients did not die and an SIRS patient group in which the patients died. The graph in FIG. 19 has a horizontal axis of the number of days since a diagnosis of SIRS is made and a vertical axis of an index (ICPS (NRBC# + Neut-Y)) calculated by scoring each of NRBC# and Neut-Y and totaling the respective score values. A line 191 shows the average value of the indices (ICPS (NRBC# + Neut-Y)) of the SIRS patient group in which the patient did not die. A line 192 shows the average value of the indices (ICPS (NRBC# + Neut-Y)) of the SIRS patient group in which the patients died. Each error bar attached to the lines 191 and 192 shows the highest value and the lowest value of an index (ICPS (NRBC# + Neut-Y)).

Most of the indices (ICPS (NRBC# + Neut-Y)) indicated by the line 191 are not greater than "2", and most of the indices (ICPS (NRBC# + Neut-Y)) indicated by the line 192 are greater than "2". Therefore, "2" can be designated as the determination threshold for determining whether the severity of SIRS is very high and the probability of death is high, or the severity of SIRS is moderate and the probability of death is low.

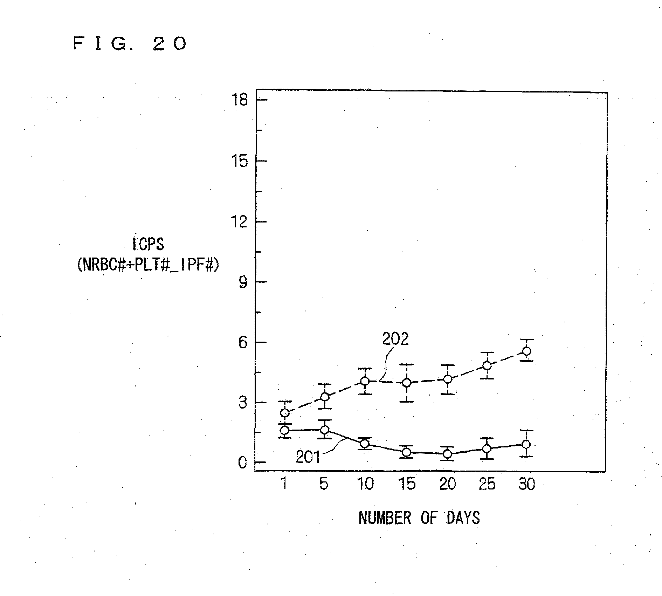

FIG. 20 shows temporal changes of an index (ICPS (NRBC# + PLT#_IPF#)) obtained by the blood cell counter 1 measuring the blood of a plurality of SIRS patients, the temporal changes being shown separately for an SIRS patient group in which the patients did not die and an SIRS patient group in which the patients died. The graph in FIG. 20 has a horizontal axis of the number of days since the day on which a diagnosis of SIRS is made and a vertical axis of an index (ICPS (NRBC# + PLT#_IPF#)) which is calculated by scoring each of NRBC# and PLT#_IPF# and totaling the respective score values. A line 201 shows the average value of the indices (ICPS (NRBC# + PLT#_IPF#)) of the SIRS patient group in which the patients did not die. A line 202 shows the average value of the indices (ICPS (NRBC# + PLT#_IPF#)) of the SIRS patient group in which the patients died. Each error bar attached to the lines 201 and 202 shows the highest value and the lowest value of an index (ICPS (NRBC# + PLT#_IPF#)).

Most of the indices (ICPS (NRBC# + PLT#_IPF#)) indicated by the line 201 are not greater than "2", and most of the indices (ICPS (NRBC# + PLT#_IPF#)) indicated by the line 202 are greater than "2". Therefore, "2" can be designated as the determination threshold for determining whether the severity of SIRS is very high and the probability of death is high, or the severity of SIRS is moderate and the probability of death is low.

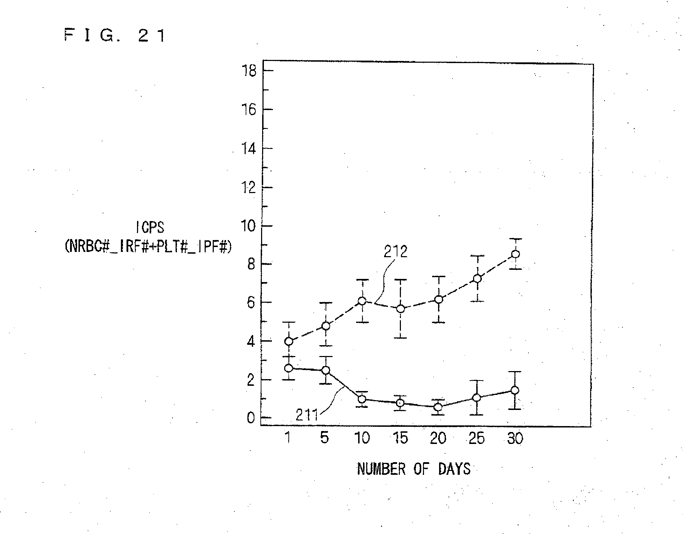

FIG. 21 shows temporal changes of an index (ICPS (NRBC#_IRF# + PLT#_IPF#)) obtained by the blood cell counter 1 measuring the blood of a plurality of SIRS patients, the temporal changes being shown separately for an SIRS patient group in which the patients did not die and an SIRS patient group in which the patients died. The graph in FIG. 21 has a horizontal axis of the number of days since the day on which a diagnosis of SIRS is made and a vertical axis of an index (ICPS (NRBC#_TRF# + PLT#_IPF#)) calculated by scoring each of NRBC#_IRF# and PLT#_IPF# and totaling the respective score values. A line 211 shows the average value of the indices (ICPS (NRBC#_IRF# + PLT#_IPF#)) of the SIRS patient group in which the patients did not die. A line 212 shows the average value of the indices (ICPS (NRBC#_IRF# + PLT#_IPF#)) of the SIRS patient group in which the patients died. Each error bar attached to the lines 211 and 212 shows the highest value and the lowest value of an index (ICPS (NRBC#_IRF# + PLT#_IPF#)).

Most of the indices (ICPS (NRBC#_IRF# + PLT#_IPF#)) indicated by the line 211 are not greater than "3", and most of the indices (ICPS (NRBC#_IRF# + PLT#_IPF#)) indicated by the line 212 are greater than "3". Therefore, "3" can be designated as the determination threshold for determining whether the severity of SIRS is very high and the probability of death is high, or the severity of SIRS is moderate and the probability of death is low.

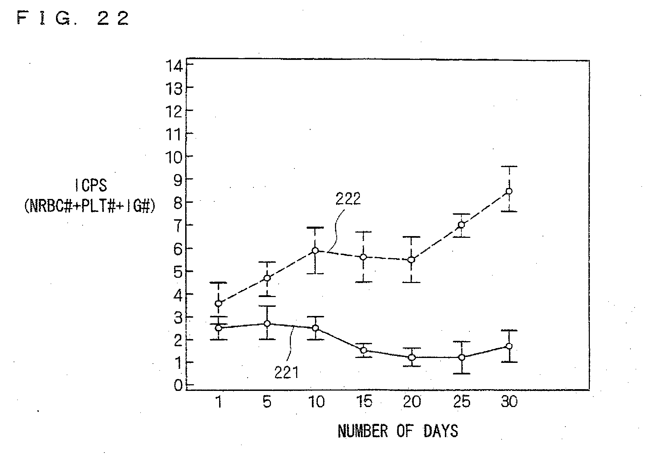

FIG. 22 shows temporal changes of an index (ICPS (NRBC# + PLT# + IG#)) obtained by the blood cell counter 1 measuring the blood of a plurality of SIRS patients, the temporal changes being shown separately for an SIRS patient group in which the patients did not die and an SIRS patient group in which the patients died. The graph in FIG. 22 has a horizontal axis of the number of days since the day on which a diagnosis of SIRS is made and a vertical axis of the index (ICPS (NRBC# + PLT# + IG#)) calculated by scoring each of NRBC#, PLT#. and IG# and totaling the respective score values. A line 221 shows the average value of the indices (ICPS (NRBC# + PLT# + IG#)) of the SIRS patient group in which the patients did not die. A line 222 shows the average value of the indices (ICPS (NRBC# + PLT# + IG#)) of the SIRS patient group in which the patients died. Each error bar attached to the lines 221 and 222 shows the highest value and the lowest value of an index (ICPS (NRBC# + PLT# + IG#)).

Most of the indices (ICPS (NRBC# + PLT# + IG#)) indicated by the line 221 are not greater than "3" and most of the indices (ICPS (NRBC# + PLT# + IG#)) indicated by the line 222 are greater than "3". Therefore, "3" can be designated as the determination threshold for determining whether the severity of SIRS is very high and the probability of death is high, or the severity of SIRS is moderate and the probability of death is low.

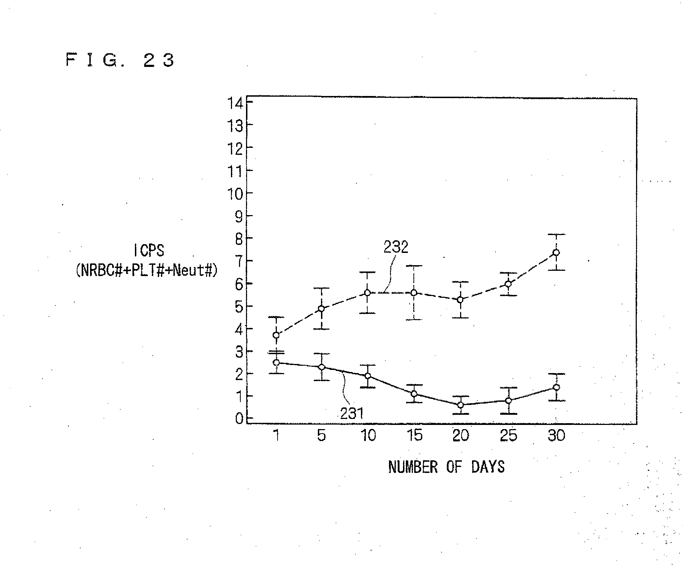

FIG. 23 shows temporal changes of an index (ICPS (NRBC# + PLT# + Neut#)) obtained by the blood cell counter 1 measuring the blood of a plurality of SIRS patients, the temporal changes being shown separately for an SIRS patient group in which the patients did not die and an SIRS patient group in which the patients died. The graph in FIG. 23 has a horizontal axis of the number of days since the day on which a diagnosis of SIRS is made and a vertical axis of the index (ICPS (NRBC# + PLT# + Neut#)) calculated by scoring each of NRBC#, PLT#, and Neut# and totaling the respective score values. A line 231 shows the average value of the indices (ICPS (NRBC# + PLT# + Neut#)) of the SIRS patient group in which the patients did not die. A line 232 shows the average value of the indices (ICPS (NRBC# + PLT# + Neut#)) of the SIRS patient group in which the patients died. Each error bar attached to the lines 231 and 232 shows the highest value and the lowest value of an index (ICPS (NRBC# + PLT# + Neut#)).

Most of the indices (ICPS (NRBC# PLT# + Neut#)) indicated by the line 231 are not greater than "3" and most of the indices (ICPS (NRBC# + PLT# + Nut#)) indicated by the line 232 are greater than "3". Therefore, "3" can be designated as the determination threshold for determining whether the severity of SIRS is very high and the probability of death is high, or the severity of SIRS is moderate and the probability of death is low.

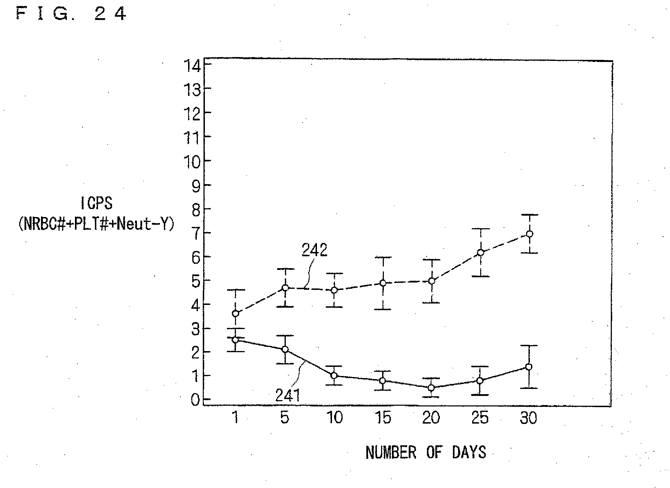

FIG. 24 shows temporal changes of an index (ICPS (NRBC# + PLT# + Neut-Y)) obtained by the blood cell counter 1 measuring the blood of a plurality of SIRS patients, the temporal changes being shown separately for an SIRS patient group in which the patients did not die and an SIRS patient group in which the patients died. The graph in FIG. 24 has a horizontal axis of the number of days since the day on which a diagnosis of SIRS is made and a vertical axis of the index (ICPS (NRBC# + PLT# + Neut-Y)) calculated by scoring each of NRBC#, PLT#, and Neut-Y and totaling the respective score values. A line 241 shows the average value of the indices (ICPS (NRBC# + PLT# + Neut-Y)) of the SIRS patient group in which the patients did not die. A line 242 shows the average value of the indices (ICPS (NRBC# + PLT# + Neut-Y)) of the SIRS patient group in which the patients died. Each error bar attached to the lines 241 and 242 shows the highest value and the lowest value of an index (ICPS (NRBC# + PLT# + Neut-Y)), respectively.

Most of the indices (ICPS (NRBC# + PLT# + Neut-Y)) indicated by the line 241 are not greater than "3", and most of the indices (ICPS (NRBC# + PLT# + Neut-Y)) indicated by the line 242 are greater than "3". Therefore, "3" can be designated as the determination threshold for determining whether the severity of SIRS is very high and the probability of death is high, or the severity of SIRS is moderate and the probability of death is low.

As described above, in the blood cell counter 1 according to the embodiment of the present invention, based on results of detection of blood cells by the detector 5 of the detection unit 2, the data processing unit 3 calculates an index (ICPS) based on first analytical information about the nucleated red blood cells in the blood (e.g.. NRBC#), and second analytical information about the granulocytes in the blood (e.g., Neut#, Neut-Y, and IG#) or/and third analytical information about the platelets in the blood (e.g., PLT# and IPF#); then outputs, based on the calculated index (ICPS), diagnosis support information for supporting prognosis of a subject. Therefore, it is possible to support in mating a prognosis based only on the analytical information, that can be obtained by the blood cell counter 1, soon after the patient has fallen into a serious condition of an illness. Accordingly, work for obtaining information of a large number of test items is not necessary and performing detection by using an apparatus other than the blood cell counter is not necessary. Therefore, it is possible to reduce the work and costs for performing tests that are necessary for supporting prognosis of a subject.

Further, the blood cell counter 1 according to the embodiment of the present invention can calculate an index (ICPS) based on results of detection of blood cells in the blood of a subject showing a systemic inflammatory response, and can support prognosis of the subject based on the calculated index (ICPS). Accordingly, for such a subject, it is possible to support in making a prognosis based on the analytical information obtained by the blood cell counter 1, soon after the subject has started showing a systemic inflammatory response, while reducing the work and costs necessary for performing tests.

Still further, the blood cell counter 1 according to the embodiment of the present invention can calculate an index (ICPS) based on results of detection of blood cells in the blood of a subject who has been given a diagnosis of Systemic Inflammatory Response Syndrome (SIRS), and can support prognosis of the subject based on the calculated index (ICPS). Accordingly, also for such a subject, it is possible to support in making a prognosis based on the analytical information obtained by the blood cell counter 1, soon after the subject has been given a diagnosis of SIRS, while reducing the work and costs necessary for performing tests.

Still further, the blood cell counter 1 according to the embodiment of the present invention can calculate an index (ICPS) based on results of detection of blood cells in the blood of a subject in an intensive care unit, and can support prognosis of the subject based on the calculated index (ICPS). Accordingly, also for such a subject, it is possible to support in making a prognosis based on the analytical information obtained by the blood cell counter 1, soon after treatment in the intensive care unit is started, while reducing the work and costs necessary for performing tests.

The blood cell counter 1 according to the embodiment outputs as diagnosis support information a message indicating that the severity of illness is very high and the probability of death is high, or a message indicating that the severity of illness is moderate and the probability of death is low. However, the present invention is not limited thereto. The index (ICPS) calculated in step S60 in FIG. 5 may be outputted as diagnosis support information.

The blood cell counter 1 according to the embodiment calculates an index (ICPS) and makes a prognosis based on the calculated index (ICPS). However, the present invention is not limited thereto. Another determination formula may be used to make a prognosis. Such a determination formula may be created by obtaining analytical information of, for example, the patients who died and the patients who did not die and by performing multivariate analysis on the obtained analytical information.

The detector 5 of the blood cell counter 1 according to the embodiment includes a single flow cytometer. However, the detector 5 of the blood cell counter 1 according to the embodiment may include a plurality of flow cytometers or an electric resistance type detector in addition to the flow cytometers. In such a case, for the platelets, a type of analytical information (PLT#) may be obtained based on the output from the electric resistance type detector, and for other items, necessary types of analytical information may be obtained based on the output from the flow cytometer as described above.

Note that the data processing unit 3 may be separated from the blood cell counter 1 according to the embodiment of the present invention. The separated data processing unit 3 may be structured as a diagnosis support apparatus that receives the first analytical information about the nucleated red blood cells in the blood (e.g., NRBC#), the second analytical information about the granulocytes in the blood (e.g., Neut#, Neut-Y, and IG#), the third analytical information about the platelets in the blood (e.g., PLT# and IPF#), the first analytical information, the second analytical information, and the third analytical information all being based on results of detection of blood cells in the blood of a subject, and outputs diagnosis support information for supporting prognosis of the subject based on the first analytical information, and the second analytical information or/and the third analytical information.

In other words, this diagnosis support apparatus does not include the detection unit 2 and is structured as an apparatus for performing only the processes of step S60 to step S62 shown in FIG. 5. Accordingly, this diagnosis support apparatus can, when it is configured to receive the first analytical information, the second analytical information, the third analytical information, and the like, support prognosis of the subject even if the diagnosis support apparatus is located away from the detection unit 2.

## Claims

1. A blood cell counter apparatus comprising:
a detector (2) adapted to detect blood cells in blood of a subject; and
a controller (3) adapted to obtain, based on a detection result by the detector, first analytical information about nucleated red blood cells in the blood, and second analytical information about granulocytes in the blood or third analytical information about platelets in the blood, and for outputting diagnosis support information for supporting prognosis of Systemic Inflammatory Response Syndrome of the subject, based on the first analytical information and on the second analytical information or the third analytical information that have been obtained, wherein
the controller (3) calculates an index based on the first analytical information and the second analytical information or the third analytical information, by using a predetermined standard, and outputs the diagnosis support information based on the calculated index.

2. The apparatus of claim 1, wherein
the controller (3) obtains based on the detection result by the detector (2) the first analytical information, the second analytical information, and the third analytical information, calculates the index based on the first analytical information to the third analytical information, and outputs the diagnosis support information based on the calculated index.

3. The apparatus of claim 2, wherein
the controller (3) obtains based on the detection result by the detector (2) fourth analytical information about immature reticulocytes in the blood, calculates the index based on the first analytical information to the fourth analytical information, and outputs the diagnosis support information based on the calculated index.

4. The apparatus of any one of claims 1 to 3, wherein
the second analytical information is information about neutrophils or immature granulocytes in the blood; and
the third analytical information is information about mature platelets or immature platelets in the blood.

5. The apparatus of claim 3, wherein
the detector (2) is configured to detect blood cells in stained blood, and
the controller (3) obtains information about number of neutrophils in the blood as the second analytical information, obtains information about mature platelets in the blood as the third analytical information, obtains based on the detection result by the detector (2) fifth analytical information indicating the degree of staining of the neutrophils in the blood, sixth analytical information about number of immature granulocytes in the blood, and seventh analytical information about immature platelets in the blood, calculates the index based on the first analytical information to the seventh analytical information, and outputs the diagnosis support information based on the calculated index.

6. The apparatus of any one of claims 1 to 5, wherein
the diagnosis support information is outputted based on a result of comparing the index with a predetermined threshold value.

7. The apparatus of any one of claims 1 to 5, wherein
the controller (3) outputs the calculated index as the diagnosis support information.

8. A diagnosis support method using an apparatus according to claim 1 comprising the steps of:
receiving an input of first analytical information about nucleated red blood cells in blood of a subject, and an input of second analytical information about granulocytes in the blood of the subject or third analytical information about platelets in the blood of the subject, both of the first analytical information, and the second analytical information or the third analytical information being based on a result of detection of blood cells in the blood of the subject; calculating an index based on the first analytical information and the second analytical information or the third analytical information, by using a predetermined standard, and
outputting diagnosis support information for supporting prognosis of Systemic Inflammatory Response Syndrome of the subject based on the calculated index.

9. The method of claim 8, wherein
the outputting of the diagnosis support information is performed based on a result of comparing the index with a predetermined threshold value.

10. The method of claim 8, wherein
the diagnosis support information is the index.

11. The method of claim 8, wherein
the calculating of the index is performed based on the first analytical information, the second analytical information, and the third analytical information.

12. The method of any one of claims 8 to 11, wherein
the first analytical information, the second analytical information, and the third analytical information of which inputs are received are information based on a result of detection of blood cells in the blood of a subject showing a systemic inflammatory response, information based on a result of detection of blood cells in the blood of a subject who has been given a diagnosis of Systemic Inflammatory Response Syndrome.

13. A computer program product comprising:
a computer readable medium; and
instructions, on the computer readable medium, adapted to enable a general purpose computer to perform operations comprising:
receiving an input of first analytical information about nucleated red blood cells in blood of a subject, and an input of second analytical information about granulocytes in the blood of the subject or third analytical information about platelets in the blood of the subject, both of the first analytical information, and the second analytical information or the third analytical information being based on a result of detection of blood cells in the blood of the subject; and
calculating an index based on the first analytical information and the second analytical information or the third analytical information, by using a predetermined standard, and
outputting diagnosis support information for supporting prognosis of Systemic Inflammatory Response Syndrome of the subject based on the calculated index.

## Patentansprüche

1. Blutzellenzählvorrichtung, umfassend:
einen Detektor (2), der ausgelegt ist, Blutzellen im Blut eines Subjekts zu detektieren; und
eine Steuerung (3), die ausgelegt ist, basierend auf einem Detektionsergebnis des Detektors erste analytische Information zu kernhaltigen roten Blutzellen im Blut, und zweite analytische Information zu Granulozyten im Blut oder dritte analytische Information zu Plättchen im Blut zu ermitteln, und zum Ausgeben von Diagnoseunterstützungsinformation zum Unterstützen der Prognose des systemischen Entzündungsreaktionssyndroms des Subjekts, basierend auf der ersten analytischen Information und auf der zweiten analytischen Information oder der dritten analytischen Information, die ermittelt worden sind, wobei
die Steuerung (3) einen Index berechnet, basierend auf der ersten analytischen Information und der zweiten analytischen Information oder der dritten analytischen Information, unter Verwendung eines vorbestimmten Standards, und die Diagnoseunterstützungsinformation basierend auf dem berechneten Index ausgibt.

2. Vorrichtung nach Anspruch 1, wobei
die Steuerung (3), basierend auf dem Detektionsergebnis durch den Detektor (2), die erste analytische Information, die zweite analytische Information und die dritte analytische Information ermittelt, den Index basierend auf der ersten analytischen Information bis zur dritten analytischen Information berechnet und die Diagnoseunterstützungsinformation, basierend auf dem berechneten Index, ausgibt.

3. Vorrichtung nach Anspruch 2, wobei
die Steuerung (3), basierend auf dem Detektionsergebnis durch den Detektor (2), vierte analytische Information zu unreifen Retikulozyten im Blut ermittelt, den Index basierend auf von der ersten analytischen Information bis zur vierten analytischen Information berechnet, und die Diagnoseunterstützungsinformation, basierend auf dem berechneten Index, ausgibt.

4. Vorrichtung nach einem der Ansprüche 1 bis 3, wobei die zweite analytische Information eine Information zu Neutrophilen oder unreifen Granulozyten im Blut ist; und
die dritte analytische Information eine Information zu reifen Plättchen oder unreifen Plättchen im Blut ist.

5. Vorrichtung nach Anspruch 3, wobei
der Detektor (2) konfiguriert ist, Blutzellen in gefärbtem Blut zu detektieren, und
die Steuerung (3) Information zur Anzahl von Neutrophilen im Blut als die zweite analytische Information ermittelt, Information zu reifen Plättchen im Blut als die dritte analytische Information ermittelt, basierend auf dem Detektionsergebnis durch den Detektor (2) eine fünfte analytische Information, welche den Grad der Färbung der Neutrophilen im Blut angibt, eine sechste analytische Information zur Anzahl unreifer Granulozyten im Blut, und eine siebte analytische Information zu unreifen Plättchen im Blut ermittelt, den Index basierend auf der ersten analytischen Information bis siebten analytischen Information berechnet, und die Diagnoseunterstützungsinformation basierend auf dem berechneten Index ausgibt.

6. Vorrichtung nach einem der Ansprüche 1 bis 5, wobei
die Diagnoseunterstützungsinformation basierend auf einem Ergebnis des Vergleichs des Index mit einem vorbestimmten Schwellenwert ausgegeben wird.

7. Vorrichtung nach einem der Ansprüche 1 bis 5, wobei
die Steuerung (3) den berechneten Index als die Diagnoseunterstützungsinformation ausgibt.

8. Diagnoseunterstützungsverfahren, das eine Vorrichtung gemäß Anspruch 1 verwendet, umfassend die Schritte:
Empfangen einer Eingabe erster analytischer Information über kernhaltige rote Blutzellen im Blut eines Subjekts, und eine Eingabe zweiter analytischer Information zu Granulozyten im Blut des Subjektes oder dritte analytische Information zu Plättchen im Blut des Subjekts, wobei sowohl die erste analytische Information als auch die zweite analytische Information oder dritte analytische Information basierend auf einem Ergebnis der Detektion von Blutzellen im Blut des Subjektes basiert, Berechnen eines Index, basierend auf der ersten analytischen Information und der zweiten analytischen Information oder dritten analytischen Information, unter Verwendung eines vorbestimmten Standards; und Ausgeben von Diagnoseunterstützungsinformation zum Unterstützen von Prognosen zum systemischen Entzündungsreaktionssyndrom des Subjekts, basierend auf dem berechneten Index.

9. Verfahren nach Anspruch 8, wobei
das Ausgeben der Diagnoseunterstützungsinformation basierend auf einem Ergebnis des Vergleichs des Index mit einem vorbestimmten Schwellenwert durchgeführt wird.

10. Verfahren nach Anspruch 8, wobei
die Diagnoseunterstützungsinformation der Index ist.

11. Verfahren nach Anspruch 8, wobei
das Berechnen des Index basierend auf der ersten analytischen Information, der zweiten analytischen Information und der dritten analytischen Information durchgeführt wird.

12. Verfahren nach einem der Ansprüche 8 bis 11, wobei
die erste analytische Information, die zweite analytische Information und die dritte analytische Information, deren Eingaben empfangen werden, Informationen sind, die auf einem Ergebnis der Detektion von Blutzellen im Blut eines Subjektes basieren, das eine systemische Entzündungsreaktion zeigt; Information basierend auf einem Ergebnis der Detektion von Blutzellen im Blut eines Subjektes, das mit systemischem Entzündungsreaktionssyndrom diagnostiziert wurde.

13. Computerprogrammprodukt, umfassend:
ein computerlesbares Medium; und
Anweisungen, auf dem computerlesbaren Medium, die ausgelegt sind, einem Universalzweckcomputer zu ermöglichen, Operationen durchzuführen, welche umfassen:
Empfangen einer Eingabe erster analytischer Information zu kernhaltigen roten Blutzellen im Blut eines Subjekts und einer Eingabe zweiter analytischer Information zu Granulozyten im Blut des Subjektes oder dritter analytischer Information zu Plättchen im Blut des Subjekts, wobei sowohl die erste analytische Information als auch die zweite analytische Information oder dritte analytische Information auf einem Ergebnis der Detektion von Blutzellen im Blut des Subjekts basieren; und
Berechnen eines Indexes, basierend auf der ersten analytischen Information und der zweiten analytischen Information oder dritten analytischen Information unter Verwendung eines vorbestimmten Standards, und
Ausgeben von Diagnoseunterstützungsinformation zum Unterstützen einer Prognose des systemischen Entzündungsreaktionssyndroms des Subjekts, basierend auf dem berechneten Index.

## Revendications

1. Appareil de comptage de cellules sanguines comprenant :
un détecteur (2) adapté pour détecter des cellules sanguines dans le sang d'un sujet ; et
une unité de commande (3) adaptée pour obtenir, sur la base d'un résultat de détection par le détecteur, des premières informations analytiques concernant les érythrocytes nucléés dans le sang et des deuxièmes informations analytiques concernant les granulocytes dans le sang ou des troisièmes informations analytiques concernant les plaquettes dans le sang et pour délivrer en sortie des informations de support de diagnostic pour supporter le pronostic d'un Syndrome de Réponse Inflammatoire Systémique du sujet, sur la base des premières informations analytiques et des deuxièmes informations analytiques ou des troisièmes informations analytiques qui ont été obtenues, où
l'unité de commande (3) calcule un indice sur la base des premières informations analytiques et des deuxièmes informations analytiques ou des troisièmes informations analytiques, en utilisant une norme prédéterminée, et délivre en sortie les informations de support de diagnostic sur la base de l'indice calculé.

2. Appareil de la revendication 1, dans lequel
l'unité de commande (3) obtient, sur la base du résultat de détection par le détecteur (2), les première informations analytiques, les deuxièmes informations analytiques et les troisièmes informations analytiques, calcule l'indice sur la base des premières aux troisièmes informations analytiques et délivre en sortie les informations de support de diagnostic sur la base de l'indice calculé.

3. Appareil de la revendication 2, dans lequel
l'unité de commande (3) obtient, sur la base du résultat de détection par le détecteur (2), des quatrièmes informations analytiques concernant les réticulocytes immatures dans le sang, calcule l'indice sur la base des premières aux quatrièmes informations analytiques et délivre en sortie les informations de support de diagnostic sur la base de l'indice calculé.

4. Appareil de l'une quelconque des revendications 1 à 3, dans lequel
les deuxièmes informations analytiques sont des informations concernant les neutrophiles ou les granulocytes immatures dans le sang ; et
les troisièmes informations analytiques sont des informations concernant les plaquettes matures ou les plaquettes immatures dans le sang.

5. Appareil de la revendication 3, dans lequel
le détecteur (2) est configuré pour détecter les cellules sanguines dans le sang coloré, et
l'unité de commande (3) obtient des informations concernant le nombre de neutrophiles dans le sang comme étant les deuxièmes informations analytiques, obtient des informations concernant les plaquettes matures dans le sang comme étant les troisièmes informations analytiques, obtient, sur la base du résultat de détection par le détecteur (2), des cinquièmes informations analytiques indiquant le degré de coloration des neutrophiles dans le sang, des sixièmes informations analytiques concernant le nombre de granulocytes immatures dans le sang et des septièmes informations analytiques concernant les plaquettes immatures dans le sang, calcule l'indice sur la base des premières aux septièmes informations analytiques et délivre en sortie les informations de support de diagnostic sur la base de l'indice calculé.

6. Appareil de l'une quelconque des revendications 1 à 5, dans lequel
les informations de support de diagnostic sont délivrées en sortie sur la base d'un résultat de comparaison de l'indice avec une valeur seuil prédéterminée.

7. Appareil de l'une quelconque des revendications 1 à 5, dans lequel
l'unité de commande (3) délivre en sortie l'indice calculé comme étant les informations de support de diagnostic.

8. Procédé de support de diagnostic utilisant un appareil selon la revendication 1, comprenant les étapes qui consistent :
à recevoir une entrée de premières informations analytiques concernant les érythrocytes nucléés dans le sang d'un sujet et une entrée de deuxièmes informations analytiques concernant les granulocytes dans le sang du sujet ou de troisièmes informations analytiques concernant les plaquettes dans le sang du sujet, à la fois les premières informations analytiques et les deuxièmes informations analytiques ou les troisièmes informations analytiques étant basées sur un résultat de détection de cellules sanguines dans le sang du sujet ;
à calculer un indice sur la base des premières informations analytiques et des deuxièmes informations analytiques ou des troisième informations analytiques, en utilisant une norme prédéterminée, et
à délivrer en sortie des informations de support de diagnostic pour supporter le pronostic d'un Syndrome de Réponse Inflammatoire Systémique du sujet sur la base de l'indice calculé.

9. Procédé de la revendication 8, dans lequel
la sortie des informations de support de diagnostic est exécutée sur la base d'un résultat de comparaison de l'indice avec une valeur seuil prédéterminée.

10. Procédé de la revendication 8, dans lequel
les informations de support de diagnostic sont représentées par l'indice.

11. Procédé de la revendication 8, dans lequel
le calcul de l'indice est exécuté sur la base des premières informations analytiques, des deuxièmes informations analytiques et des troisièmes informations analytiques.

12. Procédé de l'une quelconque des revendications 8 à 11, dans lequel,
les premières informations analytiques, les deuxièmes informations analytiques et les troisièmes informations analytiques, dont les entrées sont reçues, sont des informations basées sur un résultat de détection de cellules sanguines dans le sang d'un sujet présentant une réponse inflammatoire systémique, des informations basées sur un résultat de détection de cellules sanguines dans le sang d'un sujet auquel un diagnostic d'un Syndrome de Réponse Inflammatoire Systémique a été donné.

13. Produit de programme informatique comprenant :
un support lisible par ordinateur ; et
des instructions, sur le support lisible par ordinateur, adaptées pour permettre à un ordinateur à usage général d'exécuter des opérations comprenant le fait :
de recevoir une entrée de premières informations analytiques concernant les érythrocytes nucléés dans le sang d'un sujet et une entrée de deuxièmes informations analytiques concernant les granulocytes dans le sang du sujet ou de troisièmes informations analytiques concernant les plaquettes dans le sang du sujet, à la fois les premières informations analytiques et les deuxièmes informations analytiques ou les troisièmes informations analytiques étant basées sur un résultat de détection de cellules sanguines dans le sang du sujet ;
de calculer un indice sur la base des premières informations analytiques et des deuxièmes informations analytiques ou des troisième informations analytiques, en utilisant une norme prédéterminée, et
de délivrer en sortie des informations de support de diagnostic pour supporter un pronostic d'un Syndrome de Réponse Inflammatoire Systémique du sujet sur la base de l'indice calculé.
